# EUROPÄISCHE PATENTSCHRIFT

(11) **EP 1 189 720 B1**
(45) Veröffentlichungstag und Bekanntmachung des Hinweises auf die Patenterteilung: **06.04.2005**
(21) Anmeldenummer: 00951324.3
(22) Anmeldetag: 30.06.2000
(51) Int. Cl.: B23K 1/00

(54) **ANORDNUNG ZUM STOFFSCHLÜSSIGEN FÜGEN EINES AUS PLATTEN ZUSAMMENSETZBAREN METALLBLOCKS**
DEVICE FOR INTEGRALLY JOINING A METAL BLOCK THAT CAN BE MADE UP OF PLATES
PROCEDE D'ASSEMBLAGE PAR LIAISON DE MATIERE D'UN BLOC METALLIQUE CONSTITUE DE PLAQUES

(30) Priorität: 30.06.1999 DE 19929828
(43) Veröffentlichungstag der Anmeldung: 27.03.2002
(73) Patentinhaber: HARTMANN & LÄMMLE GMBH & CO. KG, 71277 Rutesheim (DE)
(72) Erfinder: SCHULZE, Eckehart, D-71287 Weissach (DE); HERMANN, Jakob, D-72135 Dettenhausen (DE)
(74) Vertreter: Lutz, Johannes Dieter, Dr.
(86) Internationale Anmeldenummer: PCT/EP2000/006141
(87) Internationale Veröffentlichungsnummer: WO 2001/002119

(56) Entgegenhaltungen:
- DE-A- 19 629 217
- US-A- 5 192 623
- US-A- 5 891 248

## Beschreibung

Die Erfindung betrifft eine Anordnung zum stoffschlüssigen Fügen eines aus einer Anzahl von plattenförmigen Segmenten zusammensetzbaren Metallblocks durch Hartlöten, wobei das Hartlot in zwischen einander benachbarten Segmentplatten vorhandenen Lötspalten eine großflächige Verbindung geringer Schichtdicke vermittelt.

Eine derartige Anordnung ist durch die DE 196 29 217 A1 in Verbindung mit einem Hydraulikventil sowohl für dessen Gehäuse als auch für dessen Kolben bekannt.

Bei der bekannten Anordnung wird das Lotmaterial in Depoträumen bereitgestellt, die, nachdem die Segmentplatten in die für das Zusammenfügen des Blocks durch Hartlöten erforderliche Konfiguration gebracht worden sind, in sich geschlossen sind. Die Depoträume sind durch miteinander fluchtende kreisrunde Löcher gleichen Durchmessers aneinander angrenzender Segmentplatten gebildet und an ihren Enden durch nicht gelochte Segmentplatten abgeschlossen. Sie müssen relativ große lichte Querschnitte haben, um genügend Lotmaterial aufnehmen zu können. In der Regel erstrecken sich solche Lot-Depots nicht über die gesamte, rechtwinklig zu den Lötspalten gemessene Länge der Plattenanordnung sondern jeweils nur über einige Lötspalte hinweg, und es sind mehrere, über die Länge des Stapels versetzt angeordnete Lotdepots vorgesehen, so daß insgesamt alle Lötspalte mit flüssigem Lot versorgt werden können.

Es hat sich, ungeachtet der grundsätzlichen Eignung der bekannten Anordnung zur Schaffung flächig "durchgelöteter" und damit druckfester Metallblöcke, gezeigt, daß es eines erheblichen Versuchsaufwandes bedarf, um diejenige Größe der Depoträume und Anordnung derselben innerhalb der durch Hartlöten herzustellenden Metallblöcke zu finden, die in einer Serienfertigung zu einer reproduzierbaren guten Qualität, d. h. zu einer Lotverbindung über den gesamten Bereich der Anlageflächen hinweg führt. Es kommt hinzu, daß die Blöcke für den Hartlötvorgang so orientiert sein müssen, daß die röhrenförmigen Depoträume exakt horizontal verlaufen, damit sich das aufgeschmolzene Lotmaterial gleichmäßig über die Länge der Depoträume verteilen und die Lötspalte erreichen kann, die über das jeweilige Lotdepot versorgt werden müssen. Die damit einhergehende "senkrechte" Orientierung der Lötspalte bzw. der Segmentplatten, die auf ihren schmalen äußeren Begrenzungsflächen stehend angeordnet sein müssen, erfordert Fixierungs-Maßnahmen, um die Platten, solange sie nicht miteinander verlötet sind, in der für das Fügen erforderlichen Anordnung sicher zusammenzuhalten.

Aufgabe der Erfindung ist es daher, eine Anordnung der eingangs genannten Art dahingehend zu verbessern, daß unabhängig von der Orientierung der Lötspalte eine großflächige Hartverlötung aneinander angrenzender Segmentplatten eines mehrschichtigen Metallblocks auf deren gesamter gemeinsamer Anlagefläche zuverlässig erzielbar ist und die Anordnung gleichwohl mit einfachen technischen Mitteln realisierbar ist.

Diese Aufgabe wird, gemäß dem Grundgedanken der Erfindung, dadurch gelöst, daß mindestens ein von einem Lot-Depot, das einen Vorrat von Hartlot-Material enthält, das beim Aufheizen des Plattenstapels aufschmilzt, ausgehender kapillarer Lotzuflußpfad vorgesehen ist, über den der Zufluß des geschmolzenen Lotmaterials direkt in den einzelnen, ihrerseits kapillaren Lötspalten erfolgt, die zwischen den einander zugewandten Flächen der Segmetnplatten vorhanden sind.

Hiemach wird der das Löten selbst ermöglichende Kapillareffekt auch für den Lottransport zu den einzelnen Lötspalten ausgenutzt und dadurch für das Lot, selbstverständlich in den Grenzen, innerhalb derer der Kapillareffekt nutzbar ist, die vorteilhafte Möglichkeit geschaffen, die Lötspalte im Sinne einer "hydraulischen" Parallelschaltung praktisch gleichzeitig und mit gleichem - jedenfalls bedarfsgerechten - Lötmaterial-Angebot zu erreichen, in denen es sich dann, wieder aufgrund der Kapillarwirkung, ausbreiten und die Segmentplatten großflächig benetzen kann. In dem Lotzuflußpfad strömt solange flüssiges Lotmaterial nach, bis die Lötspalte des Metallblocks verfüllt sind und das durch den Zuflußpfad und die Lötspalte gebildete kapillare Netz, in dem zwischen den Spaltwänden und dem Lotmaterial hohe Adhäsionskräfte wirksam sind verfüllt - gleichsam "vollgesogen" - ist, wobei durch eine geeignete Begrenzung des zur Verfügung gestellten Lotmaterialvorrats sichergestellt werden kann, daß innerhalb des Metallblocks vorhandene, großvolumige Hohlräume nicht verfüllt werden, da aufgrund der Kapillarwirkung der sehr engen Spalte zunächst nur die "engen" Lötspalte verfüllt werden, in die das Lot gleichsam hineingezogen wird, bevor ein Ausquellen von Lotmaterial in andere, "nicht kapillare" Hohlräume erfolgen könnte.

Bei der Nutzung der erfindungsgemäßen Anordnung bedarf es zur Vorbereitung einer Serienfertigung nicht der Durchführung aufwendiger Versuche, um eine optimale Anordnung von Lotbereitstellungskammern zu ermitteln, sondern es genügt, Lotmaterial in ausreichender Menge bereitzustellen, so daß die Lötspalte des Metallblocks einschließlich des Lotzuführungspfades vollständig verfüllt werden können, was "rechnerisch" ohne weiteres möglich ist. Die erfindungsgemäße Anordnung läßt sich unter Verwendung einfach gestalteter, vorgefertigter Teile mit geringem technischen Aufwand realisieren.

Von einer vielfach gegebenen Gestaltung des Metallblocks ausgehend, bei der äußere schmale Stirnflächen der großflächig aneinander anliegenden Segmentplatten mindestens bereichsweise koplanar verlaufen, so daß ein kapillarer Lotzuflußpfad in einem solchen Flächenbereich angeordnet werden kann, wie gemäß in Anspruch 2 vorgesehen, ist dieser gemäß Anspruch 3 auf einfache Weise, z.B. mittels eines an den Metallblock außenseitig angelegten Profilstabes realisierbar, der die Lötspalte des Metallblocks, z.B. linienförmig berührend, überquert.

In äußeren Bereichen eines Segmentplatten-Stapels angeordnete, horizontal oder vertikal verlaufende Lotzuflußpfade können mit definierter Gestaltung und entsprechend zuverlässiger Kapillarwirkung mit einfachen Mitteln in der Weise realisiert werden, daß die Segmentplatten mit randoffenen Ausnehmungen versehen sind, deren senkrecht zu den Lötspalten verlaufende Randflächen miteinander fluchten und eine die Lötspalte überquerende Nut bilden, in die ein Profilstab eingesetzt wird, der innerhalb der Nut mindestens einen sich spitzwinklig verengenden, geschlossen berandeten Kanal begrenzt und entlang mindestens einer die Lötspalte überquerenden Linie in Anlage mit der Nutwand gehalten ist.

Diesem Gestaltungsprinzip entsprechende Lot-Zuflußpfade können auf vielfältige Weise realisiert werden, wofür durch die Merkmale der Ansprüche 5 bis 7 mehr in die Einzelheiten gehende, alternativ oder in Kombination nutzbare Spezifikationen angegeben sind. Je nach der Nutform ergibt sich hierbei in Verbindung mit einem mindestens bereichsweise zylinderförmigen Profilstab entweder eine Berührungslinie, entlang derer zwei sich keilförmig verengende kapillare Spalte mit verschwindender Spaltweite (0) und verschwindendem Keilwinkel (0) aneinander anschließen, dies z.B. in dem Fall, daß der zylindrisch gewölbte Bereich des Profilstabes mit einer ebenen Nutgrund-Fläche zur Anlage kommt, oder zwei Berührungslinien, wenn die Nut einen V-förmigen Querschnitt hat, oder auch drei Berührungslinien, wenn ein runder oder auf einem mehr als 180° umspannenden Umfangsbereich runder Profilstab in eine Nut eingesetzt ist, die zueinander parallele Nutwangen hat, zwischen denen sich ein ebenflächiger Nutgrund erstreckt.

In den Fällen, daß sich aufgrund der Form des Profilstabes und der Nut, in die er eingesetzt ist, mindestens zwei Berührungslinien ergeben, ist der durch den Profilstab und die Nut geschlossen berandete Kanal auch als Lot-Depotraum für draht- oder flachstab-förmiges Hartlot geeignet, dies jedenfalls dann, wenn die Nuttiefen relativ groß sind, d.h. im Falle rechtwinklig aneinander anschließender Nut-Begrenzungsflächen mindestens dem Krümmungsradius der zylindermantelförmigen Fläche des in die Nut eingesetzten Stabes entsprechen.

Alternativ hierzu können den Lot-Transport zu den Lötspalten vermittelnde. außenseitig an dem Segmentplattenstapel angeordnete Lot-Zuflußpfade gemäß den Merkmalen der Ansprüche 9 bis 11 auch mit plattenseitigen Nuten relativ geringer Tiefe und der Grundform nach flachstabförmigen Profilkörpem realisiert sein, die durch eine Verstemmung innerhalb der Nuten auch eine geeignete Vorfixierung des Segmentplattenstapels für den Lötprozeß in einem Lötofen vermitteln.

Zur Aufnahme von Lot-Vorrat geeignete Räume können innerhalb derartiger "flacher" Nuten durch zentrale Vertiefungen derselben berandet sein, die außenseitig durch den Profilstab überbrückt und dadurch nach außen abgeschlossen sind. Eine derartige Gestaltung von Lot-Zuflußpfaden ist zumindest dann geeignet, wenn diese vertikal verlaufend ausgebildet sind und/oder an vertikal oder schräg ansteigenden Außenflächen des Metallblocks ihrerseits rechtwinklig oder schräg zu den Lötspalten verlaufend ausgebildet sind. Alternativ oder zusätzlich zu einem an einer äußeren Randfläche des Plattenstapels verlaufenden Lotzuflußpfad kann ein "innerer" d.h. durch die Segmentplatten selbst begrenzter Lotzuflußpfad in der Weise realisiert sein, daß dieser durch miteinander fluchtende, geschlossen berandete, vorzugsweise kreisrunde Öffnungen der den Block bildenden Segmentplatten und einen durch diese Öffnungen hindurchtretenden Metallprofilstab gebildet ist, der eine der Form der Öffnungen geometrisch ähnliche, der Fläche nach geringfügig kleinere Querschnittsfläche hat und mit den Öffnungsrändem der Segmentplatten in durchgängigem, linienförmigem Berührungskontakt steht. Hierzu kann ein kreisrunder Stab geeignet sein, der einen etwas kleineren Durchmesser hat als die Öffnungen der Segmentplatten und bezüglich der zentralen Längsachse der Öffnungen soweit exzentrisch angeordnet ist, daß sich der durchgehende Berührungskontakt entlang einer Mantellinie des Profilstabes ergibt.

In einer bevorzugten Gestaltung der Anordnung ist mindestens ein Lotzuflußpfad vorgesehen, der durch miteinander fluchtende, kreisrund berandete Öffnungen der Segmentplatten und eine den Kanal, der durch die Öffnungen gebildet ist, durchsetzende Wendelfeder realisiert ist, deren Federwendeln in durchgehend linienförmiger Berührung mit sämtlichen Öffnungsrändern stehen, wobei es besonders zweckmäßig ist, wenn die Wendelfeder auf Block gewickelt ist, was geringstmöglichem Querschnitt des in diesem Falle geschlossen berandeten kapillaren Lot-Transportkanals entspricht.

Wenn mindestens zwei Lotzuflußpfade vorgesehen sind, z.B. in einer bezüglich einer zentralen Achse des Segmentplattenstapels diametral gegenüberliegenden Anordnung, so können diese auch zu einer die Segmentplatten in einer definierten Position haltenden - zentrierenden - Anordnung im Sinne einer Vorfixierung für den Lötvorgang genutzt werden.

Unabhängig davon, ob ein kapillarer Lotzuflußpfad im Außenbereich des durch Hartlöten zu fügenden Metallblocks oder in dessen Innenbereich anzuordnen ist, können zur Aufnahme für einen Lotvorrat taschen- oder trichterförmige, mit der Umgebungsatmosphäre in kommunizierender Verbindung gehaltene Lot-Depoträume in einer solchen Anordnung vorgesehen sein, daß geschmolzenes Lot unter dem Einfluß der Schwerkraft zu dem/den kapillaren Lotströmungspfad(en) fließen kann.

Lotzuflußpfade gemäß den Merkmalen des Anspruchs 18 eignen sich insbesondere für die Eckbereiche eines aus mehreren Segmentplatten mit rechtwinkligen Eckbereichen bestehenden Metallblocks und können durch einfache Biegebearbeitung zungenförmiger Plattenelemente geschaffen werden.

Mittels gemäß Anspruch 19 in den gefügten Metallblock integrierter Zuganker, die mit den Spezifikationen gemäß den Ansprüchen 20 und 21 realisiert sein können, ist es auf einfache Weise möglich, den Metallblock gegen aufweitende Kräfte zu stabilisieren, die z.B. durch hohen hydraulischen Druck in durch den Metallblock führenden Anschlußkanälen entstehen können.

Wenn in dem Segmentplattenstapel in sich geschlossene, "blinde" Hohlräume vorgesehen sind, die bevorzugt durch miteinander fluchtende Öffnungen gleichen Querschnitts der zwischen den äußersten Segmentplatten angeordneten "inneren" Segmentplatten berandet sind, so ist es gemäß den Merkmalen der Ansprüche 24 und 25 auf einfache Weise möglich, während des Lötens die miteinander zu verbindenden Segmentplatten kräftig aneinander zu drücken und minimale Lötspaltweiten zu realisieren, die zu besonders festen Lötverbindungen führen.

Weitere Einzelheiten der erfindungsgemäßen Anordnung ergeben sich aus der nachfolgenden Beschreibung spezieller Ausführungsbeispiele anhand der Zeichnung, wobei im Zuge der Funktionsbeschreibung der Ausführungsbeispiele auch Verfahrensweisen erläutert werden, die zu einem besonders festen Gefüge der mit der erfindungsgemäßen Anordnung herstellbaren Metallblöcke führen. Es zeigen:
- Fig. 1: eine erfindungsgemäße Anordnung zum Hartlöten mit vier, außenseitig an einem Stapel zu einem kompakten Metallblock miteinander zu verlötender Segmentplatten angeordneten Lotzuflußpfaden, in perspektivischer, schematisch vereinfachter Ansicht,
- Fig. 2: den Lot-Depotbereich eines der Lotzuflußpfade, im Schnitt längs einer der vertikalen Mittelebenen der Anordnung gemäß Fig. 1,
- Fig. 3: einen Schnitt längs der Ebene III-III der Fig. 2,
- Fig. 4a: eine weitere Gestaltung eines bei der Anordnung gemäß Fig. 1 geeigneten Lotzuflußpfades, in einer der Fig. 2 entsprechenden Schnittdarstellung,
- Fig. 4b: einen Schnitt längs der Linie IVb-IVb der Fig. 4a,
- Fig. 4c: eine Abwandlung des Lotzuflußpfades gemäß den Figuren 4a und 4b in einer der Fig. 4b entsprechenden Schnittdarstellung,
- Fig. 5a: ein weiteres Gestaltungsbeispiel eines Lotzuflußpfades in einer der Fig. 4a entsprechenden Schnittdarstellung längs der Ebene Va-Va der Fig. 5b,
- Fig. 5b: eine Anordnungsvariante von Lotzuflußpfaden gemäß Fig. 5a mit zur geordneten Orientierung - "Zentrierung" - der Segmentplatten genutzten Stahlstäben in schematisch vereinfachter TeilDraufsicht,
- Fig. 6a: eine weitere Gestaltung eines zu den Lotzuflußpfaden gemäß den Figuren 1 bis 5b funktionsanalogen Lotzuflußpfades,
- Fig. 6b: die Gestaltung eines in den Segmentplattenstapel integrieren Zugankers, in einer der Fig. 6a entsprechenden Schnittdarstellung,
- Fig. 6c: eine Einzelheit eines in einem evakuierbaren sowie unter Schutzgasdruck setzbaren Lötofen angeordneten Segmentplattenstapel zur Erläuterung eines zu einer besonders hohen Festigkeit des gelöteten Metallblocks führenden Lötverfahrens, und
- Fig. 7: einen allein durch Elemente der Segmentplatten realisierten Lotzuflußpfad, für einen Eckbereich eines Metallblocks gemäß Fig. 1, in schematisch vereinfachter perspektivischer Teildarstellung.

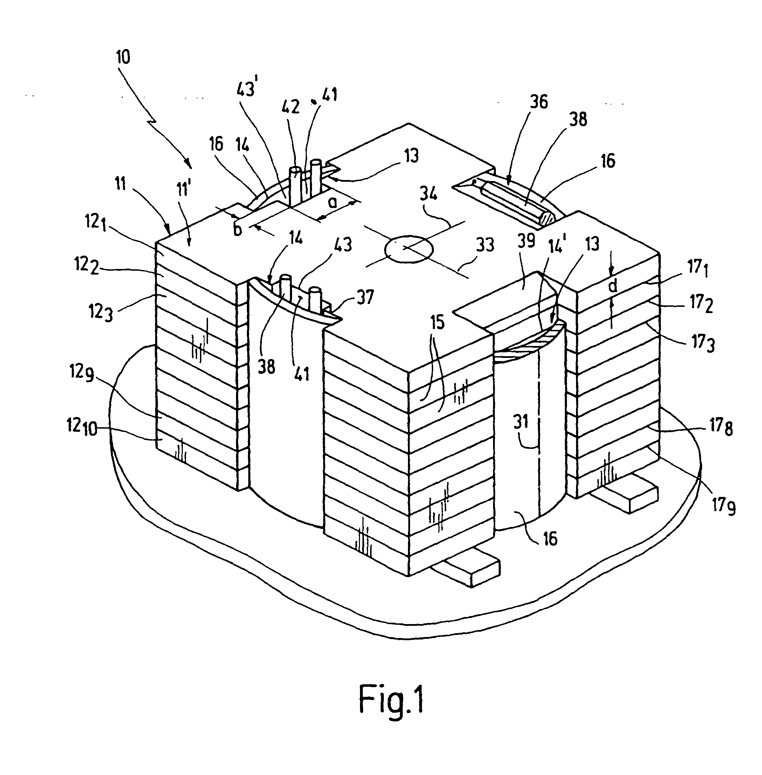

Zweck der in der Fig. 1 insgesamt mit 10 bezeichneten Anordnung, die in einem Stapel 11 übereinander liegende Segmentplatten 12₁ bis 12₁₀ aus Stahl sowie in miteinander fluchtende, randoffene Nuten 13 der Segmentplatten zur Bildung von Lot-Zuflußpfaden 14 eingesetzte Metall-Profilstäbe 16 umfaßt, ist es, in einem Hartlötprozeß eine stoffschlüssig-feste Verbindung der Segmentplatten 12₁ bis 12₁₀ untereinander zu einem hochfesten, gleichsam einstückigen Metallblock 11' zu erzielen, dessen äußere Form im wesentlichen derjenigen des Plattenstapels 11 entspricht. Für den Metallblock 11' sei, ohne Beschränkung der Allgemeinheit, d.h. lediglich zum Zweck der Erläuterung, eine Verwendung als Hydraulik-Anschlußblock angenommen, über den z.B. der P-Hochdruckausgang und der T-Rücklaufanschluß eines nicht dargestellten hydraulischen Druckversorgungsaggregats mit den entsprechenden P- und T-Anschlüssen von, der Einfachheit halber ebenfalls nicht dargestellten Hydraulikventilen, je einzeln, verbindbar sind, die in einer den Versorgungsanschlüssen gegenüberliegenden Anordnung an den Hydraulikanschlußblock anmontiert sind, wobei die funktionsgerechte hydraulische Verbindung vermittelnde, innerhalb des Anschlußblocks verlaufende Kanäle durch geschlossen berandete Öffnungen der Segmentplatten 12₁ bis 12₁₀ gebildet sind, die durch die Überlappung ihrer lichten Querschnitte die jeweiligen kommunizierenden Verbindungen zwischen den Versorgungsanschlüssen und den Ventilanschlüssen vermitteln.

Für das zur Erläuterung gewählte Anordnungsbeispiel sei angenommen, däß die Segmentplatten 12₁ bis 12₁₀, abgesehen von den Nuten 13 quadratisch berandet sind, mit Kantenlängen um 20cm und einer Dicke d um 10mm, und daß sie mit ihren dem Flächenbetrag nach großen Begrenzungsflächen aneinander anliegend zu dem Stapel 11 aufgeschichtet sind, derart, daß ihre schmalen seitlichen Begrenzungsflächen 15 an den vier seitlichen Begrenzungsflächen des Stapels 11 koplanar verlaufen, so daß der Stapel 11 durch rechteckige, ebene, vertikale Begrenzungsflächen berandet ist.

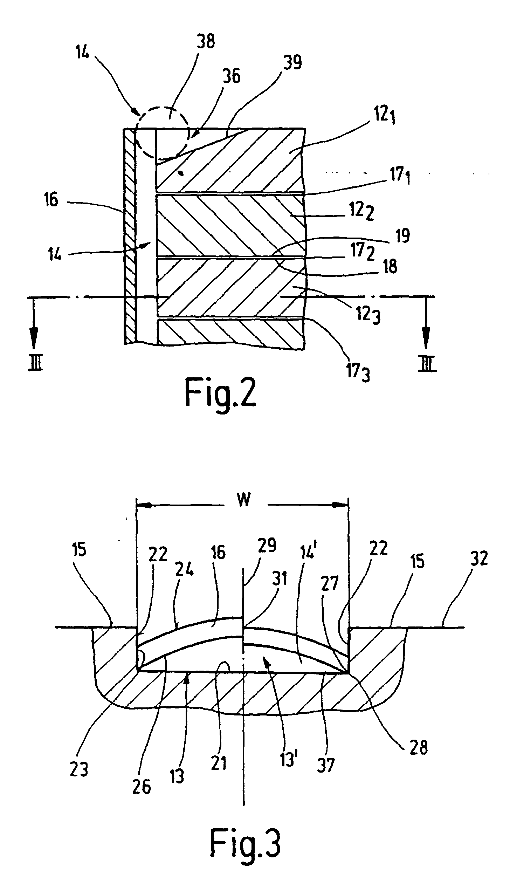

Um optimale Festigkeit des durch den Hartlötvorgang zu schaffenden - "einstückigen" - Metallblocks 11' zu erzielen, ist es erforderlich, die zwischen den Segmentplatten 12ᵢ (i = 1 bis n; n = 10) durch deren große Begrenzungsflächen berandeten Lötspalte 17ⱼ (j = 1 bis n - 1) vollständig mit Lot zu verfüllen, d.h. in den gesamten großflächigen Überlappungsbereichen der Plattenbegrenzungsflächen, innerhalb derer aufeinander zuweisende Flächenbereiche der jeweils unteren Plattenbegrenzungsfläche 18 und der benachbarten oberen Begrenzungsfläche 19 (Fig. 2) vorhanden sind.

Die Lötspalte 17₁ bis 17₉ haben, wenn die Segmentplatten 12₁ bis 12₁₀ noch "lose" aufeinander gestapelt sind, wegen der jeweils nur punktförmigen Anlagen aneinander noch eine hinreichende "vertikale" lichte Weite, daß sich flüssiges Lot innerhalb dieser Spalte aufgrund der Kapillarwirkung derselben gleichmäßig, d.h. flächig verteilen kann. Dies gilt auch dann, wenn die Segmentplatten 12₁ bis 12₁₀ mit höheren Kräften, als aus ihrem Eigengewicht resultieren würde, aneinander angedrückt werden, z.B. durch ein auf die oberste Segmentplatte 12₁ ausgesetztes Gewicht, zumal eine hierdurch allenfalls erreichbare Verringerung der Spaltweite zu einer das Einziehen von Lot in die Lötspalte 17₁ bis 17₉ begünstigenden Erhöhung der Kapillarwirkung zur Folge hätte, die mit abnehmender Spaltweite zunimmt. Dieser Effekt wird auch bei den für die Zuführung von Lotmaterial zu den Lötspalten 17₁ bis 17₉ vorgesehenen Lot-Zuflußpfaden 14 ausgenutzt.

Zur Erläuterung möglicher Gestaltungen bei der Anordnung 10 nutzbarer Zuflußpfade 14 sei zunächst auf den im rechten Teil der Ansichtsdarstellung der Fig. 1 sowie den Schnittdarstellungen der Figuren 2 und 3 dargestellten Lot-Zuflußpfad 14 Bezug genommen:

Die Segementplatten 12₁ bis 12₁₀ sind in den mittleren Bereichen ihrer schmalen Seitenflächen 15 mit den randoffenen Nut-Ausnehmungen 13 versehen, die jeweils denselben flach-rechteckigen lichten Querschnitt haben. Sie sind so angeordnet, daß in der für das Fügen des Metallblocks 11' vorgesehenen "zentrierten" Position der Segmentplatten 12₁ bis 12₁₀ die Nutgrund-Flächen 21 (Fig. 3) und die Nutwangen-Flächen 22 der Nut-Ausnehmungen 13 jeweils miteinander fluchten, so daß sich in dieser Konfiguration des Metallblocks 11' eine sich über dessen Höhe erstreckende Nut 13' ergibt, mit der sämtliche Lötspalte 17₁ bis 17₉ in kommunizierender Verbindung stehen.

In diese Nut 13' ist ein zweckmäßigerweise aus demselben Material wie die Segmentplatten 12₁ bis 12₁₀ bestehender flach-gekrümmter Profilstab 16 eingesetzt, der die Form eines flach gekrümmten, sich z.B. über einen Umfangsbereich von 20° erstreckenden Ausschnittes eines Rohrmantels hat, dessen seitliche schmale Längsbegrenzungsflächen 23, zwischen denen sich die konvex gekrümmte Außenfläche 24 und die konkav gekrümmte Innenfläche 26 des Profilstabes 16 erstrecken, in einem Ausgangszustand des Profilstabes 16, in dem dieser noch nicht fest mit den Segementplatten verbunden ist, parallel zueinander verlaufen. Der Profilstab 16 ist so ausgebildet, daß er in seinem Ausgangszustand in die Nut 13' so eingelegt oder eingeschoben werden kann, daß Berührungskontakt seiner schmalen Längsbegrenzungsflächen 23 mit den Nutwangen-Flächen 22 der Nut-Ausnehmungen 13 der Segmentplatten 12₁ bis 12₁₀ gegeben ist und die inneren Eckkanten 27 des Profilstabes 16 die Eckkanten 28, entlang derer die Wellenflächen 22 der Nut-Ausnehmungen 13 an deren Nutgrund-Flächen 21 anschließen, berühren. Dieser Ausgangszustand ist im linken Teil der Fig. 3 dargestellt. In diesem Ausgangszustand des Metallprofilstabes 16 ragt dessen konvex gewölbte Außenfläche 24 über die beidseits der Nut 13 verlaufenden Bereiche der schmalen Seitenflächen 15 der Segmentplatten 12₁ bis 12₁₀ aus der Nut 13' etwas heraus. Der in seinem Ausgangszustand in der Nut 13 noch leichtgängig verschiebbare Profilstab 16 wird durch Niederdrükken seines mittleren Bereiches in Richtung auf den Nutgrund 21 in der Nut 13' verstemmt, wobei er sich mit seinen inneren Eckkanten 27 in den Eckbereichen 28 der Nutausnehmungen 13 mit dem Segementplatten-Material kraft-formschlüssig verkeilt und dadurch in der Nut 13' fixiert wird. Die Dicke des Profilstabes 16, seine Wölbung, die Tiefe der Nut 13 und ihre parallel zum Nutgrund 21 gemessene Weite w sind dahingehend aufeinander abgestimmt, daß der Profilstab 16 in der Nut 13 sicher fixiert ist, wenn er in die im rechten Teil der Fig. 3 idealisiert dargestellte Form gedrückt ist, in der die in der Längsmittelebene 29 der Nut 13' verlaufende äußere Mantellinie 31 des Profilstabes 16 in der durch die schmalen Seitenflächen 15 der Segmentplatten 12₁ bis 12₁₀ markierten Ebene 32 verläuft (Fig. 3).

Bei dem zur Erläuterung gewählten Anordnungsbeispiel gemäß Fig. 1, das in paarweise symmetrischer Anordnung zu den rechtwinklig zueinander verlaufenden "vertikalen" Mittelebenen 33 und 34 des Metallblocks 11' vier Lot-Zuflußpfade 14 mit in den Nuten 13' verstemmten Profilstäben 16 umfaßt, wird durch das Verstemmen dieser Profilstäbe 16 in den Nuten 13' auch die für das Verlöten der Segmentplatten 12₁ bis 12₁₀ erforderliche Vorfixierung der Segmentplatten 12₁ bis 12₁₀ aneinander in deren "zentrierter" Konfiguration erreicht.

Abweichend von der zur Erläuterung gewählten Darstellung der Krümmungen der äußeren und inneren Begrenzungsfläche des Profilstabes 16 in dessen in die Nut 13' eingestemmter Konfiguration hat der "vertikale" Spalt 14' des Lot-Zuflußpfades 14, senkrecht zum Nutgrund 21 gemessen eine größte lichte Spaltweite von allenfalls 0,2 bis 0,3mm, so daß geschmolzenes Lotmaterial, das z.B. von oben her aus einem Lotdepot 36 in den Spalt 14' einfließen kann, aufgrund der Kapillarwirkung des Spaltes 14', auch wenn dieser beim Lötvorgang zunächst verfüllt werden sollte, nicht nach unten aus dem Spalt 14' austreten kann, sondern aufgrund der erhöhten Kapillarwirkung des Spaltes 14' in den eckkanten-nahen Bereichen 37, in denen die Spaltweite gemäß der idealisierten Darstellung der Fig. 3 zu den Eckkanten 27 des Profilstabes und den Eckkanten 28 der Nutausnehmungen 13 hin bis auf "0" abnimmt, quantitativ von den innehalb des Zuführungs-Spaltes 14' und den mit diesem in kommunizierender Verbindung stehenden Lötspalten 17₁ bis 17₉ durch deren Kapillarwirkung abgezogen wird und sich innerhalb der Lötspalte, die diese begrenzenden Plattenflächen 18 und 19 benetzend, ausbreitet.

Bei der in der Fig.1 dargestellten Anordnung 10 sind zwei Lotdepots 36 für rundstabförmige Lotmaterialstücke 38 dadurch geschaffen, daß die oberste Segmentplatte 12₁ des Plattenstapels 11 je eine sich zwischen den Nutwangen 22 der Nut 13' erstreckende, zu dem Spalt 14' hin schräg abfallende Fasenfläche 39 hat, die sich nur über einen Teil der Dicke der obersten Segmentplatte erstreckt und zusammen mit dem oberen Rand des Profilstabes 16 eine im Querschnitt flach-trichterförmige Vertiefung bildet, in der der Lotmaterialstab 38 in unmittelbarer Nähe des Lot-Zuflußspaltes sicher deponierbar ist.

Die im linken Teil der Fig. 1 beispielhaft dargestellten Lot-Zuflußpfade 14 unterscheiden sich von den im rechten Teil der Fig. 1 und im Schnitt in der Fig. 2 dargestellten Lot-Zuflußpfaden lediglich durch die Gestaltung der Lot-Depots 41, die als taschenförmige Einsteckfächer ausgebildet sind, in die Lotmaterial-Vorratsstäbe 42 "von oben her" in der dargestellten Anordnung einsteckbar sind.

Die flach-taschenförmigen Depot-Räume 41 sind durch flache, dem lichten Querschnitt nach ebenfalls rechteckige, miteinander fluchtende Nutstufen 43 mindestens einiger der Segmentplatten 12₁ bis 12ᵢ berandet, die, von der obersten Segmentplatte 12₁ aus gesehen, einander unmittelbar benachbart sind. Diese Nutstufen 43 sind symmetrisch bezüglich der jeweiligen Quermittelebene 33 bzw. 34 des Plattenstapels 11 ausgebildet, zu denen auch die durch die Profilstäbe abgedeckten Nut-Ausnehmungen 13 symmetrisch ausgebildet sind, deren Wangen-Abstand jedoch signifikant größer ist als derjenige der Nutstufen 43. Der Nutwangen-Abstand a der durch die Nutstufen 43 insgesamt berandeten Nut 43' (Fig. 1) und deren senkrecht zu ihrem Nutgrund gemessene Tiefe b sind zu groß, als daß in der die Einstecktasche für Lot-Draht bildenden Nut 43', für sich gesehen, eine zur Lot-Versorgung der Lötspalte geeignete Kapillarwirkung auftreten könnte. Um ein Abfließen geschmolzenen Lot-Materials aus der "Taschen"-Nut 43' zu verhindern, ist diese nach unten abgeschlossen. Dieser Abschluß ist bei dem in der Fig.1 dargestellten Anordnungsbeispiel dadurch erzielt, daß die unterste Segmentplatte 12₁₀ des Segmentplattenstapels 11 nicht mit einer die Nut 43' fortsetzenden nutförmigen Ausnehmung versehen ist. Bei den mit der Einstecknut 43' als Depotraum für Lotmaterial 38 versehenen Lot-Zuflußpfad 14 erfolgt, für den Fall, daß das Lotmaterial 38 sehr rasch abschmilzt und sich zunächst im unteren Teil des taschenförmigen Lot-Depotraumes 41 ansammelt, die Lotzufuhr zu den darüber angeordneten Lötspalten 17i (i = 1 bis 9) bis 17₁ durch die Kapillarwirkung der beidseits der Taschennut 43' angeordneten, keilförmig sich zuspitzenden inneren Eckbereiche 37 der insgesamt den Lot-Zuflußpfad zusammen mit dem Profilstab 16 bildenden Nut 14', in denen das geschmolzene Lotmaterial 38 gegen die Schwerkraft bis zum obersten Lötspalt 17, emporsteigen kann, selbstverständlich unter der Voraussetzung, daß der Plattenstapel 11 insgesamt nicht zu hoch ist. Ansonsten müssen in vertikaler Richtung sich überlappende Lotzuflußpfade vorgesehen werden, die analog zu den insoweit erläuterten Lotzuflußpfaden 14 ausgebildet sind.

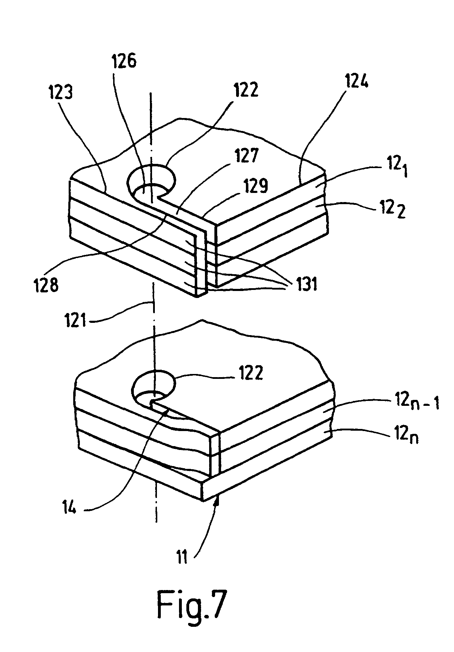

Der in der Fig. 7 dargestellte Lot-Zuflußpfad 14 eignet sich für eine Anordnung in den Eckbereichen eines Segmentplattenstapels 11 und ist ausschließlich durch Elemente der Segmentplatten 12ᵢ berandet. Zum Zweck der Erläuterung sei davon ausgegangen, daß der Plattenstapel 11 dieselbe äußere Form hat wie anhand der Fig. 1 erläutert.

Die Segmentplatten 12ᵢ sind, mit Ausnahme der untersten Segmentplatte 12₁₀ mit eckennah angeordneten, bezüglich einer gemeinsamen zentralen Längsachse 121, die senkrecht zu den Lötspalten 17ⱼ verläuft, koaxialen, kreisrund berandeten Öffnungen 122 versehen, deren zylindermantelförmige Öffnungsränder miteinander fluchten. Diese Öffnungen 122 haben einen an den benötigten Vorrat von Lötmaterial angepaßten Durchmesser. Der Abstand der gemeinsamen zentralen Längsachse 121 der Platten-Öffnungen 122 von deren einer, gemäß der Darstellung der Fig. 7 linker Randkante der Segmentplatten 12ᵢ ist um 1 mm bis 2 mm größer als der Durchmesser der kreisrunden Öffnungen 122. Der Abstand der zentralen Längsachse 121 von den anderen, gemäß der Darstellung der Fig. 7 rechten Eckkanten 124, die rechtwinklig zu den "linken" Eckkanten 123 verlaufen, hat einen Wert, der dem Doppelten bis Dreifachen des Durchmessers der miteinander fluchtenden Öffnungen 122 entspricht. Die Öffnungen beranden einen nach oben offenen, an seiner Unterseite durch die unterste Segmentplatte 12₁₀ abgeschlossenen, sämtliche anderen Segmentplatten 12₁ bis 12₉ durchsetzenden Kanal 126, der als Depot-Raum für stabförmiges Hartlot-Material dient. Von den den Kanal 126 berandenden Öffnungen 122 gehen Schlitze 127 aus, deren Schlitzwangen 128 und 129 in einem nicht deformierten Zustand der Segmentplatten 12₁ bis 12₉, der im oberen Teil der Fig. 7 dargestellt ist, parallel zu denjenigen Platten-Eckkanten 123 verlaufen, von denen die zentrale Achse 121 der Plattenöffnungen 122 den geringeren Abstand hat. Die rechtwinklig zu den Schlitzwangen 128 und 129 gemessene Weite der Schlitze 127 hat einen typischen Wert zwischen 0,5 mm und 1,5 mm und ist klein gegenüber dem Durchmesser der Öffnungen 122. Die äußeren, ecken-nahen Schlitzwangen 128 schließen glatt - "tangential" an die Ränder der Öffnungen 122 an, die inneren Schlitzwangen 129 spitzwinklig. In dem im oberen Teil der Fig. 7 dargestellten, nicht-deformierten Ausgangszustand der Segmentplatten 12ᵢ sind die Schlitze 127 randoffen und außenseitig, d.h. im ecken-nahen Bereich durch dünnwandige Zungenetemente 131 berandet. Durch Andrücken der freien Endabschnitte der Zungenelemente 131, die aufgrund ihrer geringen Dicke und ihrer relativ großen Länge leicht biegbar und anelastisch-formhaltend deformierbar sind, an die inneren Schlitzwangen 129 werden sich nach außen hin keilförmig verjüngende, nunmehr geschlossene Spalte erzielt, wie im unteren Teil der Fig. 7 dargestellt, die insgesamt den mit dem Lot-Depotkanal 126 in kommunizierender Verbindung stehen, kapillaren Lotzuflußpfad 14 bilden, über den sämtlichen Lötspalten 17₁ bis 17₉ geschmolzenes Lot zufließt.

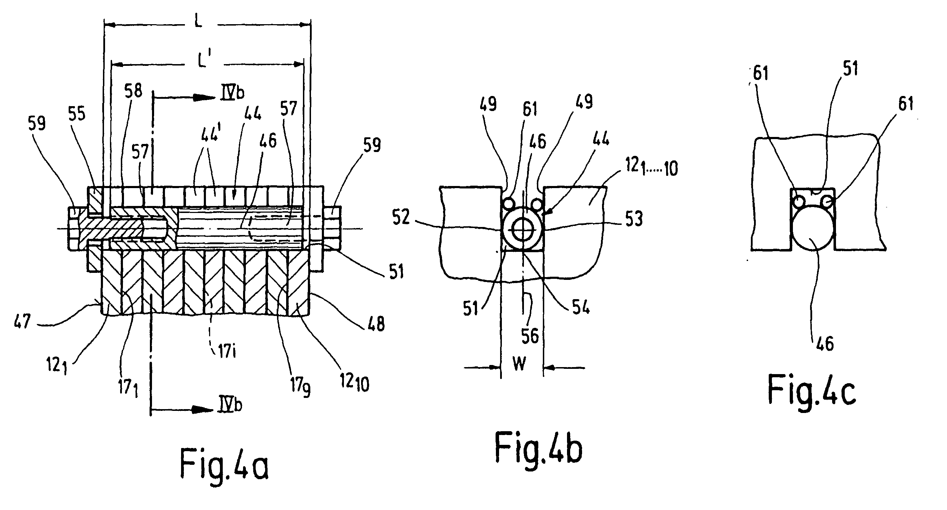

Zur Erläuterung einer weiteren Gestaltungsmöglichkeit von Lot-Zuflußpfaden mittels derer durch Kapillarwirkung flüssiges Lot den einzelnen Lötspalten 17ᵢ (i = 1 bis n) eines aus Segmentplatten 12ⱼ (j = 1 bis n +1 ) bestehenden Metallblocks 11' der durch Hartlöten gefügt wird, sei als nächstes auf die Figuren 4a und 4b Bezug genommen.

Für den Plattenstapel 11 sei eine außen quadratische oder rechteckige, insgesamt quaderförmige Ausbildung mit im wesentlichen ebenen Außenflächen, analog zu der anhand der Fig. 1 geschilderten Plattenstapel, vorausgesetzt. Zum Zweck der Erläuterung sein angenommen, daß dieser Plattenstapel 11 mit senkrechtem Verlauf der Lötpalte 17ᵢ in einen Lötofen, in dem der Lötprozeß stattfindet, eingebracht wird.

Der Lotzuflußpfad 14 gemäß den Figuren 4a und 4b ist, ähnlich wie die Lotzuflußpfade 14 gemäß Fig. 1, durch eine randoffene Nut 44 und einen in diesen eingesetzten Profilstab 46 gebildet.

Die Nut 44 erstreckt sich über die gesamte zwischen den Ebenen quadratischen Außenflächen 47 bzw. 48 ihrer end-ständigen Segmentplatten 12₁ und 12₁₀ gemessene, "horizontale" Länge L des Segmentplattenstapels 11, die im wesentlichen gleich der Summe der dicken d der Segmentplatten 12₁ bis 12₁₀ ist. Die Lötspalte 17₁ bis 17₉, die sich aufgrund der jeweils nur punktuellen Anlagen der Segmentplatten 12₁ bis 12₁₀ aneinander ergeben, tragen insoweit zu den geometrischen Abmessungen des Plattenstapels 11 nicht bei.

Die Nut 44 ist durch ineinander übergehende randoffene, dem Querschnitt nach rechteckige Randausnehmungen 44' der Segmentplatten 12₁ bis 12₁₀ gebildet, wobei die seitlichen Wangenflächen 49 und die Nutgrund-Flächen 51 der Nut-Ausnehmungen 44' jeweils miteinander fluchten. Die senkrecht zum Nutgrund gemessene Tiefe der Nut 44 ist um etwa 50% größer als die zwischen den seitlichen Wangenflächen 49 gemessene lichte Weite w der Nut 44. Der in die Nut 44 eingesetzte Profilstab 46 ist als Rundstab ausgebildet, dessen Durchmesser der lichten Weite der Nut 44 entspricht, so daß sich, wenn der Rundstab 46 in die Nut 44 eingesetzt ist, mindestens entlang zweier Mantellinien 52 und 53 des Rundstabes 46 Berührungskontakt mit den seitlichen Wangenflächen der Nut 44 ergibt, ggf., wenn der Rundstab 46 auch am Nutgrund 51 anliegt, entlang einer weiteren Mantellinie 54, die in der zum Nutgrund senkrecht verlaufenden Mittelebene 56 der Nut 44 verläuft.

Die Länge L' des Profilstabes 46 ist bei den zur Erläuterung gewählten Anordnungsbeispielen, bei denen sämtliche Segmentplatten 12₁ bis 12₁₀ dieselbe Dicke d haben, um die Hälfte dieser Dicke d kleiner als die horizontale Ausdehnung L des Plattenstapels 11, d.h. so gewählt, daß in jeder der möglichen Anordnungen des Profilstabes 46 innerhalb der Nut 44 die Mantellinien 52 und 53, mit denen der Profilstab linienförmige Berührung mit den seitlichen Wangenflächen 49 der Nut 44 hat und ggf. auch die Mantellinie 54, entlang derer er am Nutgrund 51 der Nut 44 anliegt, sämtliche Lötspalte 17, bis 17₉ überqueren und dadurch über den Profilstab 46 und mindestens die Nutwangenflächen 49 "kapillarer" Kontakt des Nut-Innenraumes mit den Lötspalten 17₁ bis 17₉ gewährleistet ist. Der Profilstab 46 ist an seinen Endabschnitten mit axialen Gewindebohrungen 57 versehen, in die Ankerschrauben 58 einschraubbar sind, die sich mit ihren Köpfen 59 an den Außenseiten von Ankerplatten 55 abstützen, die ihrerseits an den Außenflächen 47 und 48 der äußeren Segmentplatten 12₁ bzw. 12₁₀ in deren die Nutöffnung unmittelbar umgebenden Bereichen abgestützt sind.

Bei der in den Figuren 4a und 4b dargestellten Gestaltung des Lot-Zuflußpfades 14 mit nach oben offener Nut 44 können z.B. drahtförmige Lot-Vorratsstücke 61 in den oberhalb des Rundprofilstabes 46 verbleibenden Nutraum eingelegt werden, wie in der Fig. 4b beispielhaft dargestellt.

Ist der Lot-Zuflußpfad an der Unterseite des Plattenstapels 11, d.h. mit nach unten offener Nut 44 angeordnet, so wird der Rundprofilstab 46 mittels der Ankerschrauben 58 zweckmäßigerweise in einer der Fig. 4c entsprechenden Position kraftschlüssig fixiert, und es kann der zwischen dem Nutgrund 51 und dem Profilstab 46 verbleibende Nut-Innenraum zur Aufnahme von Lotmaterial-Stücken 61 genutzt werden.

Lot-Zuflußpfade 14 mit der anhand der Figuren 4a bis 4c geschilderten Gestaltung und Anordnung sind aufgrund ihrer Zuganker-Wirkung und des formschlüssigen Eingriffs ihrer Profilstäbe 46 mit den Nuten 44 zur kraftformschlüssigen, für die Vorbereitung des Lötprozesses notwendigen lagerichtigen Fixierung der Segmentplatten 12₁ bis 12₁₀ aneinander geeignet.

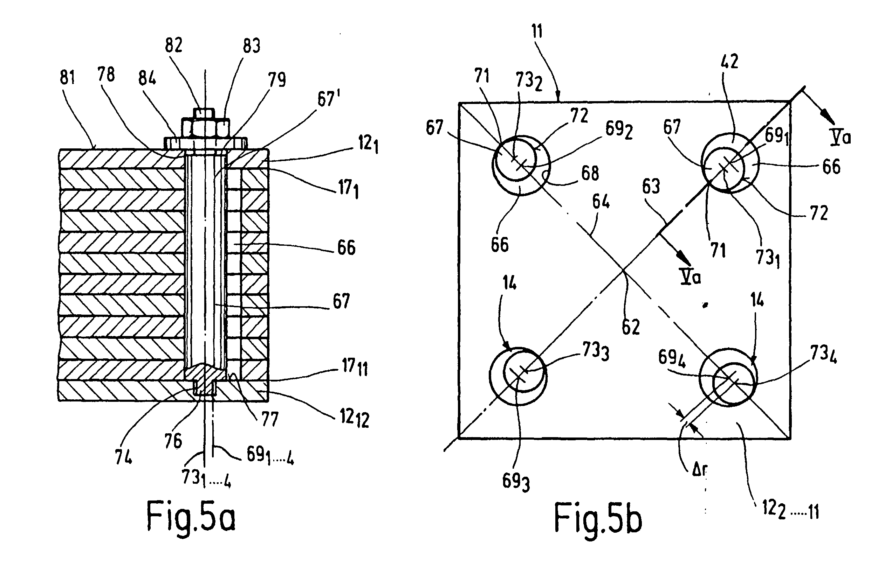

Entsprechendes gilt sinngemäß für die in den Figuren 5a und 5b dargestellte, spezielle Gestaltung von Lot-Zuflußpfaden 14, zu deren Erläuterung wieder von einer Anordnung der Grundform nach quadratischer Segmentplatten 12₁ bis 12₁₂ mit horizontalem Verlauf der paarweise durch solche Segmentplatten begrenzten Lötspalte 17₁ bis 17₁₁ ausgegangen sei. Weiter ist angenommen, daß vier Lot-Zuflußpfade 14 vorgesehen sind, die in axialsymmetrischer Gruppierung bezüglich der zentralen Achse 62 des Plattenstapels 11 angeordnet sind, entlang derer sich die Diagonalebenen 63 und 64 der Segmentplatten 12₁ bis 12₁₂ schneiden. Die Lot-Zuflußpfade 14 sind durch je einen inneren Kanal 66 kreisrunden lichten Querschnitt und einen diesen Kanal durchsetzenden runden Stahlstab 67 kleineren Querschnitts gebildet, der wiederum als Anker ausgenutzt ist, mittels dessen die Segmentplatten 12₁ bis 12₁₂ in der für den Lötprozeß vorgesehenen Anordnung zueinander vorfixierbar sind. Der Kanal ist durch miteinander fluchtende kreisrunde Ausnehmungen 68 der zwischen der obersten Segmentplatte 12₁ und der untersten Segmentplatte 12₁₂ (Fig. 5a) angeordneten Segmentplatten 12₂ bis 12₁₁ gebildet. Die zentralen Achsen 69₁ bis 69₄ der Kanäle 66 der insgesamt vier Lot-Zuflußpfade liegen paarweise in den Diagonalebenen 63 und 64 des Plattenstapels 11. Die Anker-Stahlstäbe 67 sind innerhalb der Kanäle 66 so angeordnet, daß sie deren zylindrische Wände jeweils entlang einer Mantellinie 71 ihrer zylindrischen Außenfläche 72 berühren, die ihrerseits in den Diagonalebenen 63 bzw. 64 liegen, d.h. die Stahlstäbe 67 sind innerhalb der Kanäle 66 so angeordnet, daß ihre zentralen Längsachsen 73₁ bis 73₄ von den zentralen Längsachsen 69₁ bis 69₄, entlang der jeweiligen Diagonalebene 62 oder 63 gesehen, in einem Abstand Δr angeordnet sind, der der Differenz des Radius der kreisrunden Plattenausnehmungen 68 und des Radius der zylindrischen Außenfläche 72 des jeweiligen Zugankerstabes 67 entspricht. Entlang der einen Diagonalebene 63 des Plattenstapels 11 gesehen, verlaufen die zentralen Längsachsen 73₁ und 73₃ der Ankerstäbe 67 zwischen den zentralen Längsachsen 69₁ und 69₃ der diametral einander gegenüberliegend angeordneten Lotzuflußpfade 14. Durch diese Anordnung der Zugankerstäbe 67 innerhalb der Kanäle 66 wird eine die Segmentplatten 12₁ bis 12₁₂ formschlüssig orientierende - "zentrierende" Wirkung der Ankerstäbe 67 erzielt. Diese Zentrierwirkung kann, wie für die beiden entlang der anderen Diagonalebene 64 angeordneten Lot-Zuflußpfade 14 in der Fig. 5b dargestellt, auch dadurch erzielt werden, daß die Zuganker-Stahlstäbe 67 entlang der Diagonalebene 64 gleichsam nach außen gerückt sind, d.h. die zentralen Längsachsen 69₂ und 69₄ der Kanäle 66 zwischen den zentralen Längsachsen 73₂ und 73₄ der Zugankerstäbe 67 verlaufen.

Die Kanäle 66 sind an ihrer einen, gemäß der Darstellung der Fig. 5a unteren Seite durch die untere äußere Segmentplatte 12₁₂ abgeschlossen, die zusammen mit der darüber angeordneten Segmentplatte 12₁₁ den untersten Lötspalt 17₁₁ berandet. Die unterste Segmentplatte 12₁₂ hat eine Gewindebohrung 74, in der der Zugankerstab 67 mittels eines axialen Gewindefortsatzes 76 mit fester Anlage seiner Ringstimfläche an der inneren Spaltbegrenzungsfläche 77 der untersten Segmentplatte 12₁₂ verankerbar ist. An der Oberseite ist der Kanal 66 jeweils dadurch abgeschlossen, daß ein oberer Endabschnitt 67' des Zuganker-Stahlstabs 67 eine Zentrieröffnung 78 der obersten Segmentplatte 12₁ kanalseitig verstopft, wobei seine obere, ringförmige Endstimfläche 79 noch innerhalb der Zentrieröffnung 78, d.h. in einem kleinen Abstand, der einem Bruchteil der Dicke der oberen Segmentplatte 12₁ entspricht, von deren äußerer quadratischer Begrenzungsfläche 81 verläuft. Der Zuganker-Stahlstab 67 ist an seinem oberen Ende mit einem mit der zentralen Längsachse 73ᵢ (i = 1 bis 4) koaxialen Gewinde-Fortsatz 82 versehen, auf den zum Spannen des Zugankerstabes 67, d.h. zum Zusammendrücken des Plattenstapels 11 eine Spannmutter 83 aufschraubbar ist, die sich über eine Unterlagscheibe 84, die als Tellerfeder ausgebildet sein kann, an der Außenfläche 81 der obersten Segmentplatte 12₁ abstützt. Bei den Lot-Zuflußpfaden 14 gemäß den Figuren 5a und 5b wird der sich zwischen der obersten Segmentplatte 12₁ und der untersten Segmentplatte 12₂ des Plattenstapels 11 erstreckende, in der Darstellung der Fig. 5b sichelförmige Resthohlraum des Kanals 66 als Depotraum für rund- oder flachstabförmiges Lotmaterial 42 genutzt. Die für eine gleichmäßige Lot-Versorgung der Lötspalte 17₁ bis 17₁₁ erforderliche Kapillarwirkung tritt bei den Lotzuflußpfaden gemäß den Figuren 5a und 5b in den gekrümmt keilförmigen Bereichen des Lot-Depotraumes 86 ein, die entlang der Berührungs-Mantallinien 71 der Zuganker-Stahlstäbe und der zylindrischen Wände der Kanäle 66 unmittelbar aneinander anschließen.

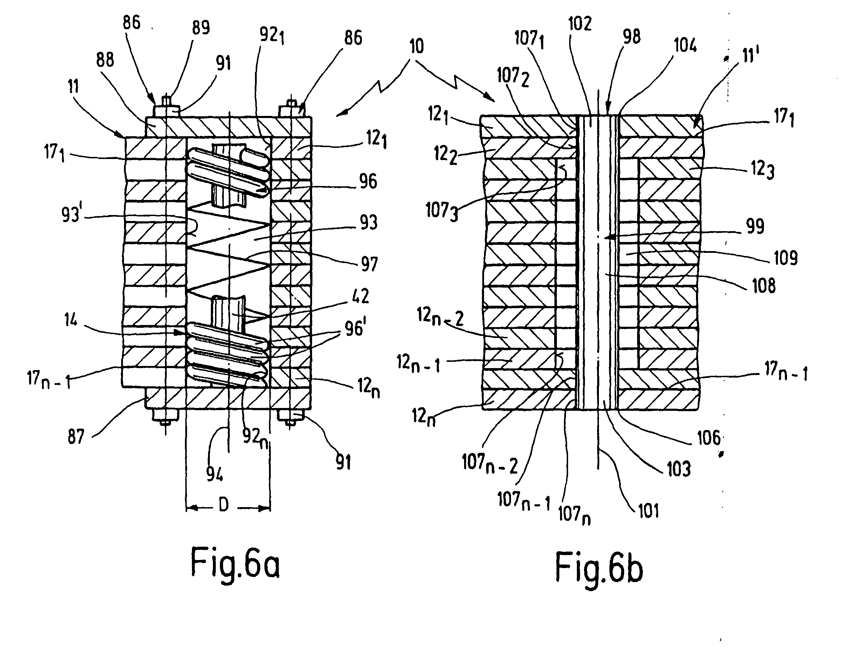

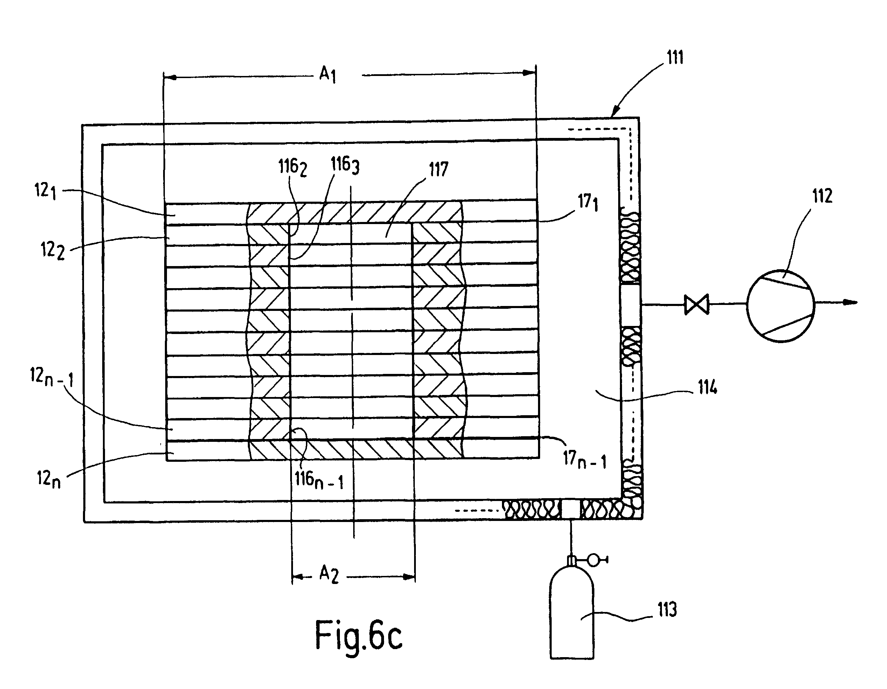

Bei der in den Figuren 6a, 6b und 6c, auf deren Einzelheiten nunmehr Bezug genommen sei, dargestellten Anordnung 10 ist ebenfalls lediglich zum Zweck der Erläuterung von einem horizontalen Verlauf der die Lötspalte 17₁ bis 17ₙ₋₁ (n = Anzahl der Segmentplatten) begrenzenden Segmentplatten 12, bis 12ₙ des Segmentplattenstapels 11 ausgegangen, der durch Hartlöten zu einem festen Block fügbar sein soll. Zur Vorfixierung des Plattenstapels 11 in der für den zusammengelöteten Block 11' vorgesehenen Anordnung der Segmentplatten 12₁ bis 12ₙ sind lediglich schematisch angedeutete Spannanker 86 vorgesehen, die mittels miteinander fluchtende Bohrungen kleinen Durchmessers der Segmentplatten 12₁ bis 12ₙ sowie Öffnungen an den Außenseiten der äußersten Segmentplatten 12₁ und 12ₙ anliegender Ankerplatten 87 und 88 durchsetzender Gewindestäbe 89 und auf deren Endabschnitte aufschraubbarer Spannmuttem 91, die sich außenseitig an den Ankerplatten 87 und 88 abstützen, realisiert sein können.

Innerhalb des Plattenstapels 11 ist durch miteinander fluchtende kreisrunde Öffnungen 92₁ bis 92ₙ ein durchgehender rohrförmiger Kanal 93 gebildet, dessen zentrale Längsachse 94 senkrecht zu den die Lötspalte begrenzenden Plattenflächen der Segmentplatten 12₁ bis 12ₙ verläuft. Dieser Kanal 93 ist mindestens an seiner Unterseite durch die dort angeordnete Ankerplatte 87, bei dem zur Erläuterung dargestellten Anordnungsbeispiel auch an seiner Oberseite durch die Ankerplatte 88 abgeschlossen, nachdem die Vormontage des Plattenstapels 11 erfolgt ist.

Der Kanal hat einen relativ großen Durchmesser D von z.B. 15 bis 20 mm und ist daher als Depot-Raum für eine relativ große Menge von Lotmaterial 42 geeignet.

Zur Bildung eines kapillaren Lot-Zuflußpfades 14, über den geschmolzenes Lot-Material, das sich beim Schmelzen zunächst im unteren Teil des Kanals 93 ansammelt, zu den höhergelegenen Lötspalten 17ᵢ (i = 1 bis n - 1) aufsteigen kann, ist in den Kanal 93 ein zylindrische, auf Block gewickelte Wendelfeder 96 eingesetzt, deren äußerer Windungsdruchmesser geringfügig, z.B. um 1 % kleiner ist als der Durchmesser D des Kanals 93, damit sie in diesen bis zur Anlage ihres unteren Endes an der unteren Ankerplatte 87 leicht eingesetzt werden kann. Die Dicke des Federdrahtes entspricht, abweichend von der zur Erläuterung gewählten Darstellung nur einem kleinen Bruchteil der als gleich vorausgesetzten Plattendicken d der Segmentplatten 12₁ bis 12ₙ. Ihre in Richtung der zentralen Achse 94 gemessene Länge ist etwas kleiner als die Gesamtdicke des Plattenstapels 11, z.B. um die Hälfte der Plattendicke, so daß sie über den obersten Lötspalt 17₁ noch deutlich hinausragt, wenn sie in den Kanal 93 eingesetzt ist.

Die Wendelfeder 96 erfährt während des Aufheizens des Plattenstapels auf die Löttemperatur (ca. 1300 °K) eine radiale Aufweitung, wobei sich ihre Wendeln 96' entlang einer durchgehenden Berührungslinie 97, deren Verlauf den Gewindegängen eines Schraubbolzens entspricht, an die zylindermantelförmige Wand 93' des Kanals 93 anlegen.

Der in der Schnittdarstellung der Fig. 6a dreispitz-förmig berandete Lot-Zuflußkanal 14 entfaltet eine hinreichend ausgeprägte Kapillarität, so daß in diesem flüssiges Lot auch gegen die Schwerkraft zu den Lötspalten 17ₙ₋₁ bis 17₁ aufsteigen kann, die flüssiges Lot in bedarfsgerechter Menge einziehen.

Zur Erläuterung möglicher Gestaltungen von Spannankem 98 mittels derer der Metallblock 11', nachdem er zusammengelötet ist, unter einer die Segmentplatten 12₁ bis 12ₙ zusammenpressenden Vorspannung gehalten bleibt, die einer Aufweitung der mit Lotmaterial verfüllten Lötspalte 17₁ bis 17ₙ₋₁ entgegenwirken kann, die z.B. durch die Wirkung hydraulischen Druckes in innerhalb des Metallblocks 11' vorhandenen hydraulischen Versorgungskanälen auftreten kann, sei nunmehr auf die diesbezüglichen Einzelheiten der Fig. 6b Bezug genommen.

Der Zuganker 98 ist durch einen Ankerstab 99 gebildet, der mit zu den Ebenen der Lötspalte 17₁ bis 17ₙ₋₁ senkrechtem Verlauf seiner zentralen Längsachse 101 den Plattenstapel 11 durchsetzt und mit seinen Endabschnitten 102 und 103 im Bereich zylindermantelförmiger Lötspalte 104 bzw. 106 mit den beiden obersten Segmentplatten 12₁ und 12₂ sowie mit den beiden unteren Segmentplatten 12ₙ₋₁ und 12ₙ des Plattenstapels 11 mit Abschluß des Lötprozesses fest verlötet ist. Diese zylindermantelförmigen Lötspalte 104 und 106 sind blockseitig durch mit der zentralen Längsachse 101 koaxiale, miteinander fluchtende kreisrunde Ausnehmungen 107₁ und 107₂ der obersten beiden Segmentplatten 12₁ und 12₂ bzw. kreisrunde Ausnehmungen 107ₙ und 107ₙ₋₁ der beiden untersten Segmentplatten 12ₙ und 12ₙ₋₁ berandet, wobei der Durchmesser dieser kreisrunden Ausnehmungen, abgesehen von dem zur Bildung der zylindermantelförmigen Lötspalte 104 und 106 erforderlichen - geringfügigen - Übermaß demjenigen des Ankerstabes 99 entspricht. Die Lotzufuhr zu den zylindermantelförmigen Lötspalten 104 und 106 erfolgt über die durch die beiden obersten Segmentplatten 12₁ und 12₂ bzw. die beiden untersten Segmentplatten 12ₙ₋₁ und 12ₙ berandeten Lötspalte 17₁ und 17ₙ₋₁, die mit dem/den kapillaren Lot-Zuflußpfad(en) 14 der Anordnung 10 in kommunizierender Verbindung stehen.

Der sich zwischen den Endabschnitten 102 und 103 des Ankerstabes 99, die nach dem Löten fest mit den äußeren Segmentplattenpaaren 12₁, 12₂ sowie 12ₙ₋₁ und 12ₙ verbunden sind, erstreckende Mittelabschnitt 108 des Ankerstabes durchsetzt einen ringzylindrischen Hohlraum 109, der durch kreisrunde, bezüglich der zentralen Längsachse 101 konzentrische, miteinander fluchtende Öffnungen 107₃ bis 107ₙ₋₂ derjenigen Segementplatten 12₃ bis 12ₙ₋₂ berandet ist, die zwischen den Segementplatten 12₁ und 12₂ bzw. 12ₙ₋₁ und 12ₙ angeordnet sind, mit denen der Ankerstab 99 fest verlötet ist. Der lichte Durchmesser dieser Öffnungen 107₃ bis 107ₙ₋₂ der "Zwischen"-Segmentplatten 12₃ bis 12ₙ₋₂ ist signifikant, d.h. mindestens 2 bis 3 mm größer als der Durchmesser des Ankerstabes 99, so daß zwischen diesem und der Wand des durch die Ausnehmungen 107₃ bis 107ₙ₋₂ berandeten ringzylindrischen Hohlraumes 109 keine Kapillarwirkung entfaltet wird, die zu einer festen Verbindung des Ankerstabes 99 mit den "Zwischen"-Segmentplatten 12₃ bis 12ₙ₋₂ führen könnte.

Der Ankerstab 99 besteht aus einem Material, dessen thermischer Ausdehnungskoeffizient α signifikant größer ist als derjenige des Stahl-Materials, aus dem die Segmentplatten 12₁ bis 12ₙ bestehen. Vorausgesetzt, daß diese aus einem gängigen Stahl mit einem Kohlenstoffgehalt von 1% bestehen, ist für den Ankerstab 99 ein wiederum gängiges Edelstahl-Material geeignet, das einen Ausdehnungskoeffizienten hat, der etwa 1,5-mal größer ist als derjenige des Stahl-Materials.

Der Ankerstab 99 ist so dimensioniert, und innerhalb des Plattenstapels 11 so angeordnet, daß er während des Lötvorganges, d.h. wenn sich der gesamte Plattenstapel 11 auf der Löttemperatur von z.B. 1000 °C befindet, die seinem Durchmesser entsprechenden Öffnungen 107₁, 107₂ der oberen einander benachbarten Segmentplatten 12₁ und 12₂ sowie die Öffnungen 107ₙ₋₁ und 107ₙ der unteren beiden Segmentplatten 12ₙ₋₁ und 12ₙ auf deren gesamter Tiefe durchquert. Sobald die Löttemperatur, oberhalb derer das Lotmaterial flüssig ist, unterschritten wird, ist der Ankerstab 99 jeweils auf seiner der doppelten Dicke der Segmentplatten entsprechenden Länge der Endabschnitte 102 und 103 mit den beiden obersten Segmentplatten 12₁ und 12₂ sowie den beiden untersten Segmentplatten 12ₙ₋₁ und 12ₙ fest verbunden. Nachdem diese Verbindung mit dem Abkühlen des fest verlöteten Metallblocks 11' erzielt ist, gerät der Ankerstab 99 mit dem weiteren Abkühlen zunehmend unter eine axiale Vorspannung, da seine Tendenz zur Verkürzung stärker ausgeprägt ist als diejenige des Materials der Segmentplatten 12₁ bis 12ₙ. Aufgrund seiner Elastizität wirkt er wie eine kräftig vorgespannte Feder, die den Segmentplattenstapel 12₁ bis 12ₙ zusammenzieht.

Das anhand der Fig. 6b geschilderte Prinzip der Realisierung eines Spannankers kann natürlich in vielfältiger Weise abgewandelt werden, insbesondere auch so, daß die Spannanker-Wirkung nur zwischen den äußersten Segmentplatten 12₁ und 12ₙ wirksam wird.

Für die Gestaltung des Plattenstapels 11 gem. Fig. 6c sei vorausgesetzt, daß der Lötprozeß in einem lediglich schematisch angedeuteten Lötofen 111 stattfindet, der zur Vorbereitung des Lötvorganges mittels einer Vakuumpumpe 112 evakuierbar ist und während des Lötvorganges durch Einblasen eines nicht brennbaren Gases, z. B. eines Edelgases, aus einem Hochdruck-Vorratsbehälter 113 einem erhöhten Druck von z.B. 6 bar in dem den Plattenstapel 11 enthaltenden Behandlungsraum 114 gesetzt werden kann.

Innerhalb des Plattenstapels 11 sind durch miteinander fluchtende Ausnehmungen 116₂ bis 116ₙ₋₁ der Segmentplatten 12₂ bis 12ₙ₋₁, die zwischen den äußersten Segmentplatten 12₁ und 12ₙ angeordnet sind, in sich geschlossene, bei dem zur Erläuterung gewählten Ausführungsbeispiel kreiszylindrische Hohlräume 117 gebildet, die über die Grundfläche des Plattenstapels 11 in einer möglichst regelmäßigen Verteilung angeordnet sind. Die Dimensionierung dieser Hohlräume ist in einer typischen Auslegung dahingehend auf die gesamte Grundfläche A1 des Plattenstapels 11, die als quadratisch oder rechteckig angenommen sei, abgestimmt, daß die Summe der Querschnittsflächen A2 der Hohlräume 117 etwa 1/8 bis 1/4 der Grundfläche A1 beträgt.

In der Fig. 6d ist der Einfachheit halber nur einer dieser Hohlräume 117 dargestellt. Die Lotzufuhr zu den einzelnen Lötspalten sei nach einer der anhand der Figuren 1 bis 6a erläuterten Varianten realisiert. Zum Verlöten des Segmentplattenstapels 11 zu dem einheitlichen Metallblock 11' wird gemäß einer bevorzugten Verfahrensweise wie folgt vorgegangen:

Während des Aufheizens des Segmentplattenstapels wird der Behandlungsraum 114 des Ofens bzw. der Innenraum einer Druckkammer, in der der Ofen 111 untergebracht ist, evakuiert. Hierbei werden auch die "geschlossenen" Hohlräume 117 des Segmentplattenstapels 11 die über die noch lotfreien Lötspalte 17₁ bis 17ₙ₋₁ mit dem Behandlungsraum 114 in kommunizierender Verbindung stehen, evakuiert. Sobald das Lotmaterial schmilzt und in die Lötspalte 17₁ bis 17ₙ₋₁, diese vollständig ausfüllend, eingezogen wird, werden die geschlossenen Hohlräume 117 gegen den Behandlungsraum 114 hermetisch abgedichtet, wobei das Vakuum innerhalb der Hohlräume 117 bestehen bleibt. Noch während das Lotmaterial flüssig ist, wird der Behandlungsraum 114 unter einen erhöhten Gasdruck von z.B. 6 bar gesetzt, was aufgrund des Druckunterschiedes zwischen dem Behandlungsraum 114 und den im Inneren der geschlossenen Hohlräume 117 herrschenden, extrem niedrigen Drücken zu Kräften führt, die den Segmentplattenstapel 11 im Sinne einer Verringerung der Weiten der Lötspalte 17₁ bis 17ₙ₋₁ zusammendrücken. Ein quantitatives Ausweichen des flüssigen Lotmaterials aus den Lötspalten 17₁ bis 17ₙ₋₁ in die Hohlräume 117 hinein ist nicht zu befürchten, da die im Bereich der Lötspalte 17, wirksamen Kapillarkräfte das flüssige Lot auch gegen den höheren Außendruck im Behandlungsraum 114 in den Lötspalten 17₁ bis 17ₙ₋₁ zumindest in dem Umfang halten, daß die großflächige Benetzung der einander gegenüberliegenden Plattenflächen gewährleistet bleibt und allenfalls soviel Flüssiglot in die Hohlräume 117 einbringt, wie durch das Zusammendrücken der Segmentplatten aus den Lötspalten 17₁ bis 17ₙ₋₁ verdrängbar ist. Der erhöhte Druck im Behandlungsraum wird für einige Minuten, z.B. 5 bis 10 Minuten aufrecht erhalten, jedenfalls für eine Zeitspanne, nach der, erfahrungsgemäß, von einer erwünschten Minimierung der Lot-Schichtdicken in den Lötspalten 17₁ bis 17ₙ₋₁ ausgegangen werden kann. Durch das Einbladen von Schutzgas unter erhöhtem Druck wird auch der Abkühlvorgang eingeleitet, wobei der erhöhte Innendruck zweckmäßigerweise so lange aufrecht erhalten wird, bis das Lotmaterial quantitativ erstarrt ist.

## Patentansprüche

1. Anordnung zum stoffschlüssigen Fügen eines aus einer Anzahl von Platten zusammensetzbaren Metallblocks durch Hartlöten, wobei das in Lot-Depots enthaltene Hartlot-Material (42), das beim Aufheizen des Plattenstapels (11) aufschmilzt, über Lotzuflusspfade zu den zwischen einander benachbarten Segment-Platten (12ᵢ; i=1,2,...n) vorhandenen Lötspalten (17ⱼ; j=1,2,...,n-1) gelangt und in diesen eine großflächige Verbindung geringer Schichtdicke vermittelt, **dadurch gekennzeichnet, dass** mindestens ein von einem Lotdepot ausgehender Lotzuflußpfad (14) als kapillarer Zuflusspfad ausgebildet ist, in den der Zufluss des geschmolzenen Lotmaterials zu den einzelnen Lötspalten durch Kapillarwirkung erfolgt.

2. Anordnung nach Anspruch 1, **dadurch gekennzeichnet, dass** der kapillare Lotzuflußpfad an einem außenseitigen Flächenbereich des zur Bildung des Metallblocks (11') vorgesehenen Plattenstapels (11) angeordnet ist, in dem die äußeren schmalen Stirnflächen der großflächig aneinander anliegenden Segmentplatten (12;) koplanar verlaufen.

3. Anordnung nach Anspruch 1 oder Anspruch 2, **dadurch gekennzeichnet, dass** der kapillar Lotzuflußpfad (14) durch einen an den Metallblock (11') außenseitig angelegten Profilstab gebildet ist, der die Lötspalte des Metallblocks überquert.

4. Anordnung nach Anspruch 3, **dadurch gekennzeichnet, dass** die Segementplatten (12) mit randoffenene Ausnehmungen (13) versehen sind, deren senkrecht zu den Lötspalten (17ⱼ) verlaufende Randflächen miteinander fluchten und eine die Lötspalte überquerende Nut (13') bilden, und daß in die Nut ein Profilstab (16) eingesetzt ist, der innerhalb der Nut einen sich spitzwinklig verengenden, geschlossen berandeten Kanal begrenzt und entlang mindestens einer die Lötspalte (17ⱼ) überquerenden Linie in Anlage mit der Nutwand gehalten ist.

5. Anordnung nach Anspruch 4, **dadurch gekennzeichnet, daß** der Profilstab (46) eine bereichsweise zylindermantelförmige Außenfläche hat, die entlang mindestens einer Mantellinie eine ebene oder schwächer gekrümmte Begrenzungsfläche der Nut berührt.

6. Anordnung nach Anspruch 5, **dadurch gekennzeichnet, daß** der Profilstab (46) als Rundstab oder als außen rundes Rohr ausgebildet ist, der/das mindestens entlang zweier Mantellinien (52 und 53) ebene oder schwächer gekrümmte Nutwangen - und/oder Nutgrundflächenbereiche berührt.

7. Anordnung nach einem der Ansprüche 4 bis 6, **dadurch gekennzeichnet, daß** die Nut (44) einen ebenen Nutgrund (51) und rechtwinklig zu diesem verlaufende Nutwangenflächen hat, daß der in die Nut eingesetzte Profilstab (46) auf einem mehr als 180° umspannenden Umfangsbereich die Form eines Rundstabes hat, der mit dem Scheitel seines gekrümmten Bereiches zum Nutgrund hinweisend in der Nut angeordnet ist, und daß die senkrecht zum Nutgrund gemessene Tiefe der Nut mindestens dem Krümmungsradius des in die Nut eingesetzten Stabes entspricht und vorzugsweise einen Wert hat, der zwischen dem doppelten Wert des Krümmungsradius und dem vierfachen Wert desselben liegt.

8. Anordnung nach einem der Ansprüche 3 bis 7, **dadurch gekennzeichnet, daß** der Profilstab (16) eine äußere Begrenzung eines Lot-Aufnahmeraumes bildet.

9. Anordnung nach Anspruch 4, **dadurch gekennzeichnet, daß** die Nut (13') einen der Grundform nach flach-rechteckigen lichten Querschnitt hat, wobei die in den Randbereichen (37) des Nutgrundes (21) senkrecht zu diesem gemessenen Tiefe der Nut signifikant kleiner ist als die zwischen den Nutwangen (22) gemessene lichte Weite w, und daß der in die Nut eingesetzte Profilstab (16) flach gekrümmt ist.

10. Anordnung nach Anspruch 9, **dadurch gekennzeichnet, daß** der Profilstab in die Nut eingestemmt ist.

11. Anordnung nach Anspruch 9 oder Anspruch 10, **dadurch gekennzeichnet, daß** der Profilstab (16) die Form eines sich über einen Umfangsbereich von 15° bis 20° erstreckenden Rohrmantel-Ausschnitts hat, dessen Längsbegrenzungsflächen (23) parallel zueinander verlaufen, wobei die zwischen diesen Längsbegrenzungsflächen gemessene Breite des Profilstabes der lichten Weite (w) der Nut entspricht.

12. Anordnung nach einem der Ansprüche 9 bis 11, **dadurch gekennzeichnet, daß** durch zentrale Vertiefungen (43) der Nuten Lot-Depoträume (41) gebildet sind, die durch den Profilstab (16) überbrückt sind.

13. Anordnung nach einem der Ansprüche 1 bis 3, **dadurch gekennzeichnet, daß** ein Lotzuflußpfad (14) durch miteinander fluchtende. geschlossen berandete, vorzugsweise kreisrunde Öffnungen (68) der den Block bildenden Segmentplatten (12ᵢ) und einen durch diese Öffnungen hindurchtretenden Metallprofilstab (67) gebildet ist, der eine der Form der Öffnungen geometrisch ähnliche, der Fläche nach geringfügig kleinere Querschnittsfläche hat und mit den Öffnungsrändem in linienförmigem Berührungskontakt steht.

14. Anordnung nach einem der Ansprüche 1 bis 13, **dadurch gekennzeichnet, daß** mindestens ein Lotzuflußpfad (14) vorgesehen ist, der durch miteinander fluchtende, kreisrund berandete Öffnungen (92ᵢ) der Segmentplatten (12ᵢ) und eine den Kanal (93), der durch die Öffnungen gebildet ist, durchsetzende Wendelfeder (96) realisiert ist, deren Federwendeln in durchgehend linienförmiger Berührung mit sämtlichen Öffnungsrändem stehen.

15. Anordnung nach Anspruch 14, **dadurch gekennzeichnet, daß** die Wendelfeder (96) auf Block gewickelt ist.

16. Anordnung nach einem der Ansprüche 13 bis 15, **gekennzeichnet durch** mindestens zwei Lotzuflußpfade in einer die Segmentplatten in einer definierten Position haltenden - zentrierenden - Anordnung.

17. Anordnung nach einem der Ansprüche 1 bis 16, **dadurch gekennzeichnet, daß** taschen- oder trichterförmige, mit der Umgebungsatmosphäre in kommunizierender Verbindung stehende Lot-Depoträume vorgesehen sind, deren Anordnung so gewählt ist, daß geschmolzenes Lot unter dem Einfluß der Schwerkraft in den/die Lotzuflußpfad(e) (14) fließt.

18. Anordnung nach einem der Ansprüche 1 bis 17, **dadurch gekennzeichnet, daß** zur Bildung eines in einem Eckbereich des Plattenstapels angeordneten kapillaren Lot-Zuflußpfades (14) Schlitze (127) vorgesehen sind, die sich, von Plattenöffnungen (122) ausgehend, die einen kanalförmigen Lot-Depotraum (126) beranden und in unmittelbarer Nähe einer Platten-Randkante (123) angeordnet sind, parallel zu dieser einen Plattenrandkante (123) verlaufend bis zu der anderen Plattenrandkante (124) erstrecken, so daß diese Schlitze (127) einseitig durch dünnwandige Zungenelemente (131) der Segmentplatten berandet sind, und daß diese Zungenelemente (131) in anschmiegende Anlage mit den jeweils gegenüberliegenden Schlitzwangen (129) gebogen sind.

19. Anordnung nach einem der Ansprüche 1 bis 17, **gekennzeichnet durch** mindestens einen Zuganker, der einen fest mit Ankerplatten, zwischen denen eine Mehrzahl von Segmentplatten des Metallblocks (11') angeordnet ist, verlöteten Anker-Stab (99) umfaßt, der Öffnungen (107ᵢ) der zwischen den Ankerplatten angeordneten Segmentplatten (12₂ bis 12ₙ₋₁) durchsetzt, wobei zwischen den Öffnungsrändem und dem Ankerstab ein signifikanter lichter Abstand vorhanden ist, der so bemessen ist, daß ein Verlöten des Stabes mit den Öffnungsrändem ausgeschlossen ist, und wobei der Ankerstab aus einem Stahl besteht, dessen thermischer Ausdehnungskoeffizient signifikant größer ist als derjenige der Segmentplatten (12ᵢ).

20. Anordnung nach Anspruch 19, **dadurch gekennzeichnet, daß** die von dem Ankerstab (99) durchsetzten Plattenöffnungen (107ᵢ) als bezüglich der zentralen Achse (101) des Stabes koaxiale Öffnungen ausgebildet sind, wobei die Spaltweite zwischen Stab und Öffnungsrand mindestens 0,2 mm, vorzugsweise 1 mm bis 2 mm beträgt.

21. Anordnung nach Anspruch 19, **dadurch gekennzeichnet, dass** die Platten (12i) aus einem Stahl-Material mit einem thermischen Ausdehnungskoeffizienten um 10 x 10⁻⁶/K und der Stab (99) aus einem Edelstahlmaterial mit einem Ausdehnungskoeffizienten um 15 x 10⁻⁶/K bestehen.

22. Anordnung nach einem der Ansprüche 1 bis 20, **dadurch gekennzeichnet, dass** der Segmentplattenstapel (11) Hohlräume enthält, die durch in kommunizierender Verbindung miteinander stehende Öffnungen (116ⱼ) zwischen den beiden äußersten Segmentplatten (12_{i,n}) angeordneter Segmentplatten berandet sind.

23. Anordnung nach Anspruch 21, **dadurch gekennzeichnet, dass** die die Hohlräume berandenden Öffnungen dieselbe lichte Querschnittsform haben und mit fluchtendem Verlauf ihrer Randflächen angeordnet sind.

24. Verfahren zum stoffschlüssigen Fügen eines mittels einer Anordnung gemäß einem der Ansprüche 1 bis 23 aus einer Anzahl von Segment-Platten zusammensetzbaren Metallblocks durch Hartlöten in einem Lötofen, der sowohl ein Löten unter Vakuum-Bedingungen als auch ein Löten unter Schutzgas ermöglicht, wobei mindestens während des Lötvorganges auf den Plattenstapel eine die Segmentplatten aneinander andrückende Kraft ausgeübt wird, die im Sinne einer Verringerung der Weiten der Lötspalte wirkt, durch deren Verfüllung durch Hartlot die stoffschlüssige Verbindung der Platten erzielt wird, **gekennzeichnet durch** die folgenden Merkmale:
a) zwischen den äußersten Segmentplatten (12₁ und 12ₙ) angeordnete Segmentplatten (12₂ bis 12ₙ₋₁) werden mit Öffnungen versehen, die innerhalb des Plattenstapels mindestens einen zentralen Hohlraum oder in regelmäßiger Verteilung über die Grundfläche des Plattenstapels eine Mehrzahl von Hohlräumen beranden, die sich zwischen durchgehenden Segmentplatten des Stapels erstrecken, wobei die lichten Querschnittsflächen der Plattenöffnungen, bezogen auf die jeweilige Segmentplatte, einem signifikanten Bruchteil von z.B. 1/10 bis 3/10 der Plattenfläche entsprechen;
b) nachdem das Lot geschmolzen ist, wird der Plattenstapel einem Schutzgasdruck ausgesetzt, der signifikant, d.h. um 1 bis 10 bar höher ist als der Druck, bei dem das Einziehen des Lotmaterials in die Lötspalte (17ⱼ) erfolgte;
c) der erhöhte Druck wird so lange aufrecht erhalten, bis das Lot in der Abkühlphase des Lötprozesses erstarrt ist.

25. Verfahren nach Anspruch 24, **dadurch gekennzeichnet, daß** der Lötofen mindestens während der Aufschmelzphase des Hartlot-Materials evakuiert wird.

## Claims

1. Device for the integral joining of a metal block made up of a plurality of plates by hard soldering, wherein the hard solder material (42) provided in solder depots, which melts as the stack (11) of plates is heated, flows through solder flow paths to the solder gaps (17ⱼ; j = 1, 2, ..., n-1) formed between adjacent surfaces of the segment plates (12i; i=1,2,...n) to form a large surface area, minimal thickness connection, thereby **characterized, that** that at least one solder inflow path (14) originating at a solder depot is a capillary flow path, in which the inflow of molten solder material to the individual solder gaps occurs by capillary action.

2. A device according to claim 1, thereby **characterized, that** the capillary supply path is provided along an external surface of the stack (11) of plates intended to form the metal block (11'), in which the outer narrow surfaces of the segment plates (12), which lie with large surfaces against each other, are coplanar.

3. A device according to claim 1 or 2, thereby **characterized, that** the capillary solder inflow path (14) is defined by a profile element lying against the outer surface of the metal block (11'), which traverses the solder gaps of the metal block.

4. A device according to claim 3, thereby **characterized, that** the segment plates (12) are provided with edge-open recesses (13), of which the edge surfaces running perpendicular to the solder gaps (17ᵢ) align with each other and form a groove (13') crossing over the solder gaps, and that a profile rod (16) is introduced into the groove. defines within the groove at least one acute narrowing closed-edged channel and is held in contact with the groove wall along at least one line crossing the solder gap (17ᵢ).

5. A device according to claim 4, thereby **characterized, that** the profile rod (46) seated in the groove has at least one section in shape of a cylindrical rod, which is in contact with at least one surface of a planar or slightly curved surface defining the groove.

6. A device according to claim 5, thereby **characterized, that** the profile rod (46) is configured as a cylindrical rod or an externally cylindrical pipe, of which the outer surface contacts the groove along two linear or slightly curved outer surface lines (52 and 53).

7. A device according to one of claims 4 to 6, thereby **characterized, that** the groove (44) has a planar groove base (51) and groove flanks extending perpendicularly thereto, that the profile rod (46) introduced therein has the shape of a cylinder over at least 180° of its outer circumference, which with the crown or apex of its curved segment is provided in the groove oriented towards the groove base, and that the depth of the groove measured perpendicular to the groove base corresponds at least to the diameter of the radius of curvature of the rod introduced in the groove and preferably has a value with is between twice the radius of curvature and the four fold value of the curvature radius.

8. A device according to one of claims 3 to 7, thereby **characterized, that** the profile rod (16) forms an outer boundary for the solder depository space.

9. A device according to claim 4, thereby **characterized, that** the groove (13') has the basic shape of a flat thin rectangle, wherein the depth of the groove measured at the edge areas (37) of the groove base (21) perpendicular to the groove base is significantly smaller than the width w measured between the groove flanks (22), and that the profile rod (16) inserted therein is slightly curved.

10. A device according to claim 9, thereby **characterized, that** the profile rod is punched or materially joined to the groove.

11. A device according to claim 9 or claim 10, thereby **characterized, that** the profile rod (16) which has the shape of a flat curved segment of a pipe or cylinder outer surface extending over an arc of 15 to 20°, of which the longitudinal edges (23) extend parallel to each other, wherein the breadth of the profile rod measured along the longitudinal edges corresponds to the width w of the groove.

12. A device according to one of claims 9 to 11, thereby **characterized, that** a solder deposit space (41) is formed by a central further deepening recess (43) in the groove, which is bridged over by the profile rod (16).

13. A device according to one of claims 1 to 3, thereby **characterized, that** the solder supply path (14) is formed by aligned, closed edged, preferably round openings (68) of the segment plates (12ᵢ) and a profile rod (67) extending therethrough, which has a shape which is geometrically analogous to the openings and a size which is slightly smaller, and which is in linear contact with the opening edges.

14. A device according to one of claims 1 to 13, thereby **characterized, that** at least one solder supply path (14) is provided, formed by aligned, circular edged openings (92ᵢ) of the segment plates (12ᵢ) and a helical coil (96) extending through the channel (93) formed by the openings, of which the helical coil is in continuous contact with the collective opening edges.

15. A device according to claim 14, thereby **characterized, tha**t the helical coil (96) is wound on a core.

16. A device according to one of claims 13 to 15, **characterized by** at least two solder supply paths in an arrangement fixing the segment plates in a defined - centered - position.

17. A device according to one of claims 1 to 16, thereby **characterized, that** pocket or wedge shaped solder deposit spaces are formed in communication with the atmosphere, of which the design is so selected, that molten solder flows under the influence of gravity into the solder supply path(s) (14).

18. A device according to one of claims 1 to 17, thereby **characterized, that** for the formation of a solder capillary supply path (14) in the edge area of the stack of plates there are provided slits (127) which extend beginning at the plate openings (122) which define a channel shaped solder depository (126) and extend in close proximity to a plate outer edge (123), running parallel to the plate outer edge (123) and extending to another outer edge (124) of the plate, such that these slits (127) are bordered on one side by thin walled tongue elements (131) of the segment plates, and that these tongue elements (131) are bent such that they are flush against the oppositely lying slit flank (129).

19. A device according to one of claims 1 to 17, **characterized by** at least one tie rod, comprising an anchor rod (99) rigidly soldered to the end plates of a metal block (11'), between which end plates a plurality of intermediate plates are provided, which anchor rod extends through openings (107ᵢ) running through the segment plates (12₂ to 12ₙ₋₁), wherein between the edges of the openings and the anchor rod a significantly greater gap exists, which is so dimensioned, that a soldering of the rod to the opening edges is precluded, and wherein the anchor rod is comprised of a material of which the thermal coefficient of expansion is significantly greater than that of the respective segment plates (12ᵢ).

20. A device according to claim 19, thereby **characterized, that** the openings (107ᵢ) through which the anchor rod (99) extends are coaxial relative to the central axis (101) of the rod, wherein the gap width between the rod and the edges of the openings is at least 0.2 mm, preferably 1 mm to 2 mm.

21. A device according to claim 19, thereby **characterized, that** the plates (12ᵢ) are comprised of a steel with a thermal coefficient of expansion of about 10 x 10⁻⁶/K and that the rod (99) is comprised of a stainless steel with a thermal coefficient of expansion of about 15 x 10⁻⁶/K.

22. A device according to one of claims 1 to 20, thereby **characterized, that** the stack of segment plates (11) includes hollow spaces, which are formed by communicating openings (116ⱼ) and bounded by the two outermost segment plates (12_{i, n}).

23. A device according to claim 21, thereby **characterized, that** the openings defining the hollow space have the same cross-sectional diameter and have edges in alignment with each other.

24. A process for the material joining, with a device according to one of claims 1 to 23, of a metal block comprised of segment plates by hard soldering in a soldering oven adapted for soldering under vacuum and under inert gas, wherein at least during the soldering process a force is exerted upon the stack pressing the stack together, which has the effect of narrowing the width of the soldering gaps which produce the material joining of the plates by their filling with solder, **characterized by** the following characteristics:
a) the segment plates (12₂ and 12ₙ₋₁) provided between the outermost segment plates (12₁ and 12ₙ) are provided with openings, which define within the stack of plates a hollow space or a plurality of hollow spaces distributed evenly about the cross section of the stack of plates, which hollow space(s) extend between the intermediate plates of the stack, wherein the cross-sectional areas of the plate openings, relative to that of the segment plates, correspond to a significant fraction of the plate surface area, for example, 1/10 to 3/10;
b) after the solder is melted, the stack of plates is subjected to pressurized inert gas, which is significantly higher, e.g., by 1 to 10 bar higher, than the pressure at which the solder was drawn into the solder gaps (17ⱼ); and
c) the elevated pressure is maintained for so long, until the solder has solidified in the cooling phase of the soldering process.

25. Process according to claim 24, thereby **characterized, that** the soldering oven is under vacuum at least during the melting phase of the hard solder material.

## Revendications

1. Dispositif de liaison matérielle, par brasage dur, d'un bloc métallique pouvant être composé d'un certain nombre de plaques, le matériau (42) de brasage dur, renfermé par des logements et entrant en fusion lors du réchauffage de la pile (11) de plaques, empruntant des trajets d'afflux de la brasure pour parvenir dans les interstices de brasage (17ⱼ ; j = 1, 2, ..., n - 1) présents entre des plaques fragmentaires (12ᵢ ; i = 1, 2, ..., n) mutuellement voisines, et instaurant, dans lesdits interstices, une liaison de grande superficie à faible épaisseur de couche, **caractérisé par le fait qu'**au moins un trajet (14) d'afflux de la brasure, partant d'un logement de brasure, est réalisé sous la forme d'un trajet capillaire d'afflux sur lequel l'afflux du matériau de brasage fondu, vers les interstices de brasage individuels, s'opère par effet de capillarité.

2. Dispositif selon la revendication 1, **caractérisé par le fait que** le trajet capillaire d'afflux de la brasure est situé dans une région superficielle extérieure de la pile (11) de plaques prévue pour la formation du bloc métallique (11'), région dans laquelle s'étendent, de manière coplanaire, les étroites faces extrêmes extérieures des plaques fragmentaires (12) portant les unes contre les autres par une grande superficie.

3. Dispositif selon la revendication 1 ou la revendication 2, **caractérisé par le fait que** le trajet capillaire d'afflux (14) est formé par une tige profilée appliquée extérieurement contre le bloc métallique (11') et coupant, dans le sens transversal, les interstices de brasage dudit bloc métallique.

4. Dispositif selon la revendication 3, **caractérisé par le fait que** les plaques fragmentaires (12) sont pourvues d'évidements (13) à bords ouverts dont les surfaces marginales, s'étendant perpendiculairement aux interstices de brasage (17ⱼ), coïncident mutuellement et forment une rainure (13') coupant transversalement lesdits interstices de brasage; et **par le fait qu'**une tige profilée (16) insérée dans la rainure délimite, à l'intérieur de ladite rainure, un canal à délimitation fermée se rétrécissant à angle aigu, et est maintenue en contact avec la paroi de la rainure le long d'au moins une ligne coupant les interstices de brasage (17ⱼ) dans le sens transversal.

5. Dispositif selon la revendication 4, **caractérisé par le fait que** la tige profilée (46) possède une surface extérieure revêtant, par zones, la forme d'une enveloppe cylindrique en contact, le long d'au moins une génératrice, avec une surface plane ou à courbure moins accentuée, délimitant la rainure.

6. Dispositif selon la revendication 5, **caractérisé par le fait que** la tige profilée (46) est réalisée sous la forme d'une tige ronde ou d'une tubulure extérieurement ronde qui est en contact, au moins le long de deux génératrices (52 et 53), avec des régions superficielles des flancs et/ou du fond de la rainure; planes ou présentant une courbure moins accentuée.

7. Dispositif selon l'une des revendications 4 à 6, **caractérisé par le fait que** la rainure (44) comprend un fond plan (51) et des flancs s'étendant à angle droit par rapport à ce dernier ; **par le fait que** la tige profilée (46) insérée dans ladite rainure revêt, sur une région périphérique couvrant plus de 180°, la forme d'une tige ronde qui est logée dans la rainure en pointant vers le fond de ladite rainure par le sommet de sa région curviligne ; et **par le fait que** la profondeur de la rainure, mesurée perpendiculairement au fond de ladite rainure, correspond au moins au rayon de courbure de la tige insérée dans ladite rainure et présente, de préférence, une valeur comprise entre le double du rayon de courbure et le quadruple de celui-ci.

8. Dispositif selon l'une des revendications 3 à 7, **caractérisé par le fait que** la tige profilée (16) matérialise une délimitation extérieure d'une chambre recevant la brasure.

9. Dispositif selon la revendication 4, **caractérisé par le fait que** la rainure (13') présente une section transversale intérieure de configuration de base rectangulaire aplatie, sachant que la profondeur de ladite rainure, mesurée dans les régions marginales (37) du fond (21) de ladite rainure, perpendiculairement à ce dernier, est notablement plus petite que la largeur intérieure w mesurée entre les flancs (22) de la rainure ; et **par le fait que** la tige profilée (16) insérée dans la rainure possède une courbure aplatie.

10. Dispositif selon la revendication 9, **caractérisé par le fait que** la tige profilée est coincée dans la rainure.

11. Dispositif selon la revendication 9 ou la revendication 10, **caractérisé par le fait que** la tige profilée (16) revêt la forme d'un segment d'enveloppe tubulaire qui s'étend sur une région périphérique de 15° à 20° et dont les surfaces (23) de délimitation longitudinale s'étendent parallèlement l'une à l'autre, la largeur de la tige profilée, mesurée entre ces surfaces de délimitation longitudinale, correspondant à la largeur intérieure (w) de la rainure.

12. Dispositif selon l'une des revendications 9 à 11, **caractérisé par le fait que** des creusures centrales (43) des rainures donnent naissance à des logements (41) de brasure qui sont coiffés par la tige profilée (16).

13. Dispositif selon l'une des revendications 1 à 3, **caractérisé par le fait qu'**un trajet (14) d'afflux de brasure est formé par des orifices (68) de préférence circulaires, coïncidant mutuellement, présentant une délimitation fermée et pratiqués dans les plaques fragmentaires (12ᵢ) matérialisant le bloc, et par une tige profilée métallique (67) qui traverse ces orifices, possède une superficie de section transversale offrant une similitude géométrique avec la forme des orifices, sa surface étant légèrement plus petite que la surface de ces derniers, et est en contact linéaire avec les bords desdits orifices.

14. Dispositif selon l'une des revendications 1 à 13, **caractérisé par le fait qu'**il est prévu au moins un trajet (14) d'afflux de la brasure, qui est matérialisé par des orifices (92ᵢ) à délimitation circulaire, coïncidant mutuellement et pratiqués dans les plaques fragmentaires (12ᵢ), et par un ressort hélicoïdal (96) qui traverse ledit canal (93) formé par lesdits orifices, et dont les spires sont en contact linéaire ininterrompu avec l'ensemble des bords desdits orifices.

15. Dispositif selon la revendication 14, **caractérisé par le fait que** le ressort hélicoïdal (96) est serré à bloc.

16. Dispositif selon l'une des revendications 13 à 15, **caractérisé par** au moins deux trajets d'afflux de la brasure, selon un agencement - à effet de centrage - maintenant les plaques fragmentaires dans une position bien définie.

17. Dispositif selon l'une des revendications 1 à 16, **caractérisé par le fait que** sont prévus des logements de brasure en forme de poches ou d'entonnoirs, en liaison communicante avec l'atmosphère environnante, dont l'agencement est choisi de telle sorte que de la brasure fondue pénètre, sous l'influence de la pesanteur, sur le ou les trajet(s) (14) d'afflux de la brasure.

18. Dispositif selon l'une des revendications 1 à 17, **caractérisé par le fait que** des fentes (127), prévues pour former un trajet capillaire (14) d'afflux de la brasure disposé dans une zone d'angle de la pile de plaques, s'étendent, à partir d'orifices (122) des plaques qui marquent la délimitation d'un logement (126) de brasure en forme de canal et se trouvent à proximité directe d'une arête marginale (123) des plaques, parallèlement à cette arête marginale (123) jusqu'à l'autre arête marginale (124) desdites plaques, si bien que la délimitation de ces fentes (127) est marquée, d'un côté, par des éléments (131) du type languettes à parois minces, faisant partie des plaques fragmentaires ; et **par le fait que** ces éléments (131) du type languettes sont cintrés pour venir au contact intime des flancs (129) des fentes, respectivement opposés.

19. Dispositif selon l'une des revendications 1 à 17, **caractérisé par** au moins un tirant d'ancrage englobant une tige d'ancrage (99) qui est brasée rigidement sur des plaques d'ancrage entre lesquelles se trouve une pluralité de plaques fragmentaires du bloc métallique (11'), et traverse des orifices (107ᵢ) des plaques fragmentaires (12₂ à 12ₙ₋₁) interposées entre les plaques d'ancrage, sachant qu'on a réservé, entre les bords des orifices et la tige d'ancrage, une distance intérieure conséquente dimensionnée de façon telle qu'un brasage de la tige avec les bords des orifices soit exclu, et sachant que ladite tige d'ancrage cousiste en un acier dont le coefficient de dilatation thermique est notablement plus grand que celui des plaques fragmentaires (12ᵢ).

20. Dispositif selon la revendication 19, **caractérisé par le fait que** les orifices (107ᵢ) des plaques, traversés par la tige d'ancrage (99), sont réalisés comme des orifices coaxiaux à l'axe central (101) de la tige, la largeur d'interstice, entre ladite tige et le bord d'un orifice, mesurant au moins 0,2 mm et, de préférence, de 1 mm à 2 mm.

21. Dispositif selon la revendication 19, **caractérisé par le fait que** les plaques (12ᵢ) consistent en un acier doté d'un coefficient de dilatation thermique avoisinant 10 x 10⁻⁶/K, et la tige (99) consiste en un acier fin présentant un coefficient de dilatation avoisinant 15 x 10⁻⁶/K.

22. Dispositif selon l'une des revendications 1 à 20, **caractérisé par le fait que** la pile (11) de plaques fragmentaires renferme des cavités dont la délimitation est marquée par des orifices (116ⱼ) mutuellement en liaison communicante, pratiqués dans des plaques fragmentaires interposées entre les deux plaques fragmentaires (12_{i, n}) situées le plus à l'extérieur.

23. Dispositif selon la revendication 21, **caractérisé par le fait que** les orifices, marquant la délimitation des cavités, possèdent la même configuration de section transversale intérieure, et sont agencés de façon telle que leurs surfaces marginales présentent une allure coïncidente.

24. Procédé de liaison matérielle au moyen d'un dispositif conforme à l'une des revendications 1 à 23, à partir d'un certain nombre de blocs métalliques pouvant être .. composés de plaques fragmentaires, par brasage dur dans un four de brasage autorisant, à la fois, un brasage sous vide et un brasage sous atmosphère de gaz protecteur, procédé dans lequel, au moins pendant le processus de brasage, la pile de plaques est soumise à l'action d'une force qui presse les plaques fragmentaires les unes contre les autres et agit dans le sens d'une diminution des largeurs des interstices de brasage dont le comblement par de la brasure dure permet d'obtenir la liaison matérielle des plaques, **caractérisé par** les particularités suivantes :
a) des plaques fragmentaires (12₂ à 12ₙ₋₁), interposées entre les plaques fragmentaires (12₁ et 12ₙ) situées le plus à l'extérieur, sont munies d'orifices marquant, à l'intérieur de la pile de plaques, la délimitation d'au moins une cavité centrale ou bien, selon une répartition régulière sur la surface de base de la pile de plaques, une pluralité de cavités s'étendant entre des plaques fragmentaires ininterrompues de la pile, sachant que les superficies de section transversale intérieure des orifices des plaques correspondent, par rapport à la plaque fragmentaire considérée, à une fraction notable représentant, par exemple, de 1/10 à 3/10 de la superficie desdites plaques ;
b) à l'issue de la fusion de la brasure, la pile de plaques est soumise à une pression de gaz protecteur qui excède notablement, c'est-à-dire de 1 à 10 bars, la pression sous laquelle l'insertion du matériau de brasage dans les interstices de brasage (17ⱼ) s'est effectuée ;
c) la pression accrue est entretenue jusqu'à ce que la brasure soit solidifiée durant la phase de refroidissement du processus de brasage.

25. Procédé selon la revendication 24, **caractérisé par le fait que** le four de brasage est dépressurisé au moins durant la phase d'entrée en fusion de la brasure dure.
